# EUROPÄISCHE PATENTSCHRIFT

(11) **EP 0 460 006 B1**
(45) Veröffentlichungstag und Bekanntmachung des Hinweises auf die Patenterteilung: **12.05.1993**
(21) Anmeldenummer: 90903146.0
(22) Anmeldetag: 19.02.1990
(51) Int. Cl.: F02M 25/00, F02D 19/00, F01N 3/24

(54) **VERFAHREN ZUR OPTIMIERUNG DER VERBRENNUNG VON KRAFTSTOFFEN BEI MINIMALER CO-EMISSION UND VORRICHTUNG ZUR DURCHFÜHRUNG DES VERFAHRENS**
PROCESS FOR OPTIMISING FUEL COMBUSTION WITH THE MINIMUM CO EMISSION AND DEVICE FOR IMPLEMENTING IT
PROCEDE ET DISPOSITIF D'OPTIMISATION DE LA COMBUSTION DE CARBURANTS AVEC DES EMISSIONS MINIMALES DE CO

(30) Priorität: 21.02.1989 DE 3905284
(43) Veröffentlichungstag der Anmeldung: 11.12.1991
(73) Patentinhaber: BVM TRIEBWERKSTECHNIK GMBH, D-10623 Berlin (DE)
(72) Erfinder: DOMBAJ, Stjepan, W-5000 Köln 40 (DE)
(74) Vertreter: Vomberg, Friedhelm, Dipl.-Phys.
(86) Internationale Anmeldenummer: DE9000111
(87) Internationale Veröffentlichungsnummer: WO9010149

(56) Entgegenhaltungen:
- EP-A- 0 055 789
- CH-C- 394 714
- GB-A- 2 148 389
- SE-B- 442 761
- US-A- 4 800 848
- Patent Abstracts of Japan, Band 8, Nr. 207, M327, Zusammenfassung von JP 59- 96468, publ. 1984-06-02 (MASAICHI MORIMOTO)
- Patent Abstracts of Japan, Band 9, Nr. 168, M396, Zusammenfassung von JP 60- 40771, publ. 1985-03-04 (TERUKAZU SUZUKI)

## Beschreibung

### Verfahren zur Optimierung der Verbrennung von Kraftstoffen bei minimaler CO-Emission und Vorrichtung zur Durchführung des Verfahrens

Die Erfindung betrifft ein Verfahren zur Optimierung der Verbrennung von Kraftstoffen bei minimaler CO-Emission durch vorherige Einführung eines Wasser, Alkohol und mindestens eines weiteren Zusatzstoffes enthaltenden Flüssigkeitsnebels in das Luft-Kraftstoff-Gemisch und Erzeugung eines homogenen Flüssigkeit-Kraftstoff-Gemisches. Die Erfindung betrifft ferner eine Vorrichtung zur Durchführung dieses Verfahrens nach dem Oberbegriff des Anspruches 13 oder 14.

In der JP-A 59-96468 wird zur Verbesserung der Verbrennungseffektivität vorgeschlagen, dem Benzin ein Additiv zuzugegeben, das aus Wasser, einer Propionsäure, Propionaten, Ethyläther, Methylalkohol, Iso-Propylalkohol und Methylpropionat in einer speziellen Mischung besteht. Das Kraftstoffadditiv setzt sich aus ca. 80 Vol.-% Wasser und je 5 Vol.-% Propionsäure und Methanol sowie den übrigen genannten Stoffen zusammen.

Aus der GB-A-2 148 389 ist eine Vorrichtung bekannt, mit einem dem Vergaser vorgeschalteten Zerstäuber für eine Flüssigkeit der im wesentlichen mindestens ein Vorratsbehälter für die Flüssigkeit, eine Vorkammer mit einem Schwimmer, der mit einem den Flüssigkeitsnebelfluß steuernden Magnetventil verbunden ist, und mindestens eine Zerstäuberkammer besitzt, die mindestens mit einer Zerstäuberwirbelkammer zur Vermischung des Flüssigkeitsnebels zur Vermischung des Flüssigkeitsnebels mit dem Luft-Kraftstoffgemisch bzw. Kraftstoff verbunden ist, wobei die Zerstäuber-Wirbelkammer eine Zuführung für den Flüssigkeitsnebel aufweist, die so gerichtet ist, daß sie weitgehend senkrecht auf den Luft-Kraftstoff-Gemisch bzw. den Kraftstoff-Strom trifft.

Die hier in Rede stehenden verwendeten flüssigen Kraftstoffe beruhen auf Erdölbasis, wobei Otto-Motoren leicht siedende und relativ zündunwillige, Dieselmotoren hingegen relativ zündwillige Kraftstoffe erfordern.

Bei der Gemischbildung und Verbrennung im Otto-Motor werden "gasförmige" Kraftstoffe meist in einer Mischkammer kurz vor Eintritt in de Zylinder mit der Luft gemischt, flüssige Kraftstoffe in einer inkorrekt mit Vergaser bezeichneten Zerstäubungseinrichtung. Bei Einspritz-Otto-Motoren wird flüssiger Kraftstoff nahe dem Einlaßventil in das Ansaugrohr gespritzt, seltener unmittelbar in den Zylinder. Zum Zündzeitpunkt ist der Kraftstoff verdampft und bildet mit der Luft ein möglichst homogenes Gemisch mit einem sich nur in engen Grenzen ändernden Mischungsverhältnis als Voraussetzung für die Zündung und Verbrennung. Die Verbrennung breitet sich aus, wenn die freiwerdende Energie genügt, um benachbarte zündfähige Gemischteile zur Reaktion zu bringen, wobei bei normaler Verbrennung die Flammenausbreitung ohne sprunghafte Geschwindigkeitsänderungen erfolgt, so daß sich die Flammenfront nahezu kugelförmig von der Zündkerze aus fortpflanzt. Die Flammenfrontgeschwindigkeit besteht aus der Brenngeschwindigkeit relativ zum unverbrann-ten Gemisch vermehrt um die Geschwindigkeit, mit der die Flammenfront durch Eigenbewegung des Gasgemisches transportiert wird. Bekannt ist, daß die durch den Einlaßvorgang und die Brennraumgeometrie des Motors beeinflußbare Transportgeschwindigkeit beeinflußbar ist, wobei hohe Turbulenz der Strömung den Mischungsvorgang begünstigt, während gerichtete Strömungen die Bildung eines homogenen Gemisches behindern. Als Störungen der Verbrennung sind das sogenannte Zündungsklopfen sowie die Oberflächenzündung (Frühzündung oder Nachzündung) bekannt. Beim Zündungsklopfen entzündet sich ein Teil des von der Flammenfront noch nicht erfaßten Gemisches von selbst und verbrennt so heftigt, daß Druckwellen hoher Frequenz entstehen, die Klopf- und Klingelgeräusche sowie thermische und mechanische Überbeanspruchung von Bauteilen, wie Kolben und Lager, verursachen. Bei der Oberflächenzündung erfolgt die initiierte Wärmezufuhr an das Gemisch unabhängig vom Zündzeitpunkt durch heiße Stellen der Brennraumoberfläche, z.B. durch glühende Ölkohlebeläge, vorstehende Dichtungskanten oder Zündkerzen zu niedrigen Wärmewertes.

Beim Dieselmotor wird der Kraftstoff erst kurz vor dem oberen Totpunkt durch eine Düse in die hochverdichtete heiße Luft eingespritzt, wobei sich der Strahl in einzelne Kraftstofftröpfchen unterschiedlicher Größe und Durchschlagkraft aufteilt und ein heterogenes Gemisch entsteht. Die Selbstzündung setzt ein entsprechend hoher Verdichtungsverhältnis voraus, dessen unterer Grenzwert mit dem Kolbendurchmesser abnimmt. Die Verbrennung setzt bei einzelnen Brennstofftröpfchen ein, indem durch Wärmeaufnahme aus der umgebenden heißen Luft Sieden und Verdampfen eintritt. Durch geeignete Diffusion von Kraftstoffdampf und Luft entsteht um den noch flüssigen Kraftstoffrest eine Mischungszone unterschiedlicher Konzentration entsprechend einem von Null (Tropfenoberfläche) auf unendlich zunehmenden Luftverhältnis. Nachteilig bei Dieselmotoren ist die bekannte Rußbildung. Entsprechend dem Siedeverhalten des Kraftstoffes verbrennen zuerst die Moleküle mit hohem Wasserstoffanteil, während schwersiedende Anteile zum Teil Crackreaktionen unterliegen, wobei schwer entzündbare Moleküle aus nahezu reinem Kohlenstoff enstehen und bei niedrigen Verbennungstemperaturen im Abgas als unverbrannter Ruß verbleiben. Er verursacht auch die starke leuchtende Gelbfärbung einer Diffusionsflamme, wogegen vorgemischte Flammen von blauer Farbe sind (Otto-Motor).

Insbesondere in den Abgasen von Otto-Motoren bildet das Kohlenmonoxid, das infolge unzureichender Verbrennung entsteht, einen hohen Schadstoffanteil. Es ist bekannt, daß Kohlenmonoxid vor allem im Luftmangelgebiet durch unvollkommene Verbrennung entsteht, wobei der Reaktionsablauf weitgehend der Wassergasreaktion folgt. Da das wirkliche Kraftstoff-Luft-Gemisch nicht völlig homogen ist, tritt demnach auch bei Luftüberschuß noch CO auf. Aus diesem Grunde sind die Versuche zur Schadstoffreduzierung durch entsprechende Änderung der Brennraumgestaltung zur verbesserten Verwirbelung der Verbrennung nur bedingt erfolgreich. Der Versuch, die Motoren im sogenannten Magerbetrieb arbeiten zu lassen, erfordert eine kontrollierte, energiereiche Zündung und ein Ausspülen der Restgase bei möglichst hoher Wandtemperatur der Brennkammer.

Zum Teil wirken sich die getroffenen Maßnahmen jedoch leistungsmindernd bei den Motoren aus. Zum Teil zeigen sie nur unzureichende Wirkungen.

Nicht zuletzt der Gesetzgeber hat daher das Hauptforschungsinteresse auf eine Abgasverminderung durch Verwendung von Katalysatoren gerichtet. Der Katalysator benötigt wabenartige Oberflächen mit einer Platin-, Radium- und Palladiumbeschichtung, auf der das endgültige Verbrennen von Kohlenwasserstoffverbindungen (HC) und Kohlenmonoxid (CO) sowie die Reduzierung von NOₓ in freien Stickstoff abläuft. Beim sogenannten Dreiwege-Katalysator wird ein geschlossener Regelkreis für die Kraftstoffzufuhr gefordert (O₂-Messung als Regelgröße mittels der sogenannten "Lambda"-Sonde).

Nachteiligerweise erlauben die Katalysatoren jedoch nicht die Verwendung von bleihaltigem Benzin, da dieses die wirksame Katalysatoroberfläche angreift. Darüber hinaus erfordern Katalysatoren hohe Verbrennungstemperaturen von 600 bis zu 800°C. Ein nicht unwesentlicher Nachteil ist der erhöhte Kraftstoffverbrauch sowie die Forderung nach Motorkonzeptionen, die mit bleifreiem Kraftstoff mit niedriger Oktanzahl betrieben werden können. Bei Dieselmotoren ist der beschriebene Katalysator praktisch wirkungslos, da er den Ruß nicht oder nur unzureichend verbrennt. Auch bestehen Bedenken hinsichtlich der Platin-Absonderungen an die Umwelt.

Es ist zwar bereits bekannt, dem Benzin unmittelbar sogenannte Additive beizugeben, die jedoch vornehmlich - falls sie überhaupt Wirkung zeigen - die Schmierfähigkeit im Motorraum erhöhen sollen. In bezug auf eine Schadstoffemissionsreduzierung sind die bisher vorgeschlagenen Additive praktisch wirkungslos.

In der US-PS 3 767 172 wird ferner vorgeschlagen, dem Kraftstoff eine Zusatzmischung beizugeben, die aus 2,5 Teilen Wasser und einem Teil Methylalkohol besteht. Hierbei soll der Alkohol eine kühlende Wirkung entfalten, die ein Zündzeitpunkttiming erlaube.

Es ist Aufgabe der vorliegenden Erfindung, ein Verfahren und eine Vorrichtung der eingangs genannten Art anzugeben, bei dem die Verbrennung dahingehend optimiert wird, daß der Kraftstoffverbrauch gesenkt und der Schadstoffausstoß (insbesondere CO-Emission) erheblich vermindert wird.

Die Aufgabe wird durch das im Anspruch 1 beschriebene Verfahren gelöst.

Erfindungswesentlicher Grundgedanke des Verfahrens ist es, eine vollständige Verbrennung dadurch zu bewirken, daß der Kraftstoff vor Einleitung in den Brennraum derart "zerstäubt" wird, daß während der Verbrennungszeit nicht nur eine vollständige Oxidation der Kohlenstoff-Wasserstoffteilchen im Bereich der Tröpfchenoberfläche abläuft, sondern aller Kohlenstoff-Wasserstoffmoleküle in einem Tröpfchen. Mit anderen Worten, durch Feinstzerteilung der Kraftstoffpartikel wird die zur Verbrennung angebotene Oberfläche vergrößert. Hierzu wird ein Flüssigkeitsnebel auf ein Luft-Kraftstoff-Gemisch oder ein mit Luft vermengter Flüssigkeitsnebel auf einen Kraftstoffstrom derart gelenkt, daß dieser die Benzintröpfchen in Feinsttröpfchen zerteilt. Bei dieser Zerteilung entstehen in nicht unerheblichem Maße positiv oder negativ geladene Benzintröpfchen, die sich normalerweise wiedervereinigen würden. Diese Wiedervereinigung (Rekombination) wird dadurch verhindert, daß die neutralen Flüssigkeitsteilchen die Benzin-Kleinsttröpfchen in einem Gemisch umlagern und somit ihre Feinheit aufrechterhalten.

Durch die vollständigere Verbrennung wird der angebotene Kraftstoff hinsichtlich seines Energiegehaltes auch mit der Folge vollständig ausgenutzt, daß die Benzineinsparung beim Betrieb eines Otto-Motors bis zu 25 %, teilweise auch 30 % erreicht wird. Mit dieser vollständigen Verbrennung geht die Minderung der CO-Emission einher, in praktischen Versuchen konnten CO-Restgehalte im Abgas unter 0,05 % gemessen werden, die erheblich unter den bisher mittels anderer Techniken erreichbaren Werten liegen.

Die Flüssigkeit bzw. ein Flüssigkeitsgemisch weist mindestens eine der folgenden Eigenschaften auf:
- spezifisch schwerer als der Kraftstoff, um ihn zerstäuben zu können,
- eine hohe Klopffestigkeit, damit die Flüssigkeit die Verbrennung im Brennraum nicht verschlechtert,
- die Flüssigkeit sollte in der Lage sein, die Verbrennungszeit zu verlängern bzw. die Verbrennungs-(Detonation-)geschwindigkeit zu hemmen, um die Kohlenwasserstoffe in jedem Benzintröpfchen vollständig verbrennen zu können.

Insbesondere besteht der Flüssigkeitsnebel entweder zum größten Teil aus destilliertem Wasser, dem eine schwache organische Säure in einer auf das destillierte Wasser bezogenen Konzentration zwischen 1/500 bis 1/200, vorzugsweise 1/300, beigemengt ist und Alkohol, wobei dieser Flüssigkeitsnebel in einer auf den Kraftstoff bezogenen Menge im Verhältnis von 1 : 1000 bis 15 : 1000 dem Kraftstoff zugegeben wird. Das Wasser schützt den Alkohol vor frühzeitigem ggf. explosivem Verbrennen. Die zugegebene schwache organische Säure besitzt eine reinigende Wirkung. Dazu kommt, daß die genannte Mischung eine hohe Neutralisationsfähigkeit aufweist, welche die Zusammenballung (Adhäsion) kleiner Benzinteilchen zu größeren verhindert, ferner besitzt die Mischung gute Antiklopffähigkeiten, was insbesondere die Verwendung unverbleiten Benzins in hochverdichteten Motoren gestattet und für eine bessere gleichmäßigere Verteilung der Zündflamme im gesamten Brennraum sorgt. Die Flüssigkeit ist weiterhin chemisch nicht aggressiv. Dennoch wird die Verbrennung ohne scharfen Peak energiereicher, da alle Partikel verbrannt werden, schließlich senkt der Alkohol den Gefrierpunkt des Gemisches erheblich und hat ebenso wie die organische Säure gute Verbrennungseigenschaften. Dabei wirkt sich die gute Brennbarkeit der Alkohole aus, die auch eine sonst zu befürchtende Abmagerung des Benzingemisches verhindert, welche die Gefahr einer unzureichenden Verbrennung vermeidet.

Vorzugsweise enthält die Flüssigkeit auf zwei Volumenteile destilliertes Wasser einen Volumenteil Alkohol, vorzugsweise niederkettige Alkohole, davon insbesondere Methanol und/oder Ethanol, was ebenso wie Wasser langsamer als Benzin verbrennt und eine Rußbildung im Zylinder verhindert.

Alternativ hierzu ist es zur Lösung der gestellten Aufgabe ebenso möglich, dem Kraftstoff ein Gemisch von etwa gleichen Anteilen von Wasser und Methanol mit geringen Glyzerinmengen einerseits und einem Methanol-Ölgemisch andererseits im Verhältnis 200 bis 400 g, vorzugsweise 300 g, Öl auf 5 Liter Methanol zuzugeben. Hierbei soll das Verhältnis von Wasser zu dem zu verbrennenden Kraftstoff wie auch das Verhältnis des Wasser-Methanol-Gemisches etwa 2,5 l : 2 l : 200 - 300 g betragen.

Aus verfahrenstechnischen Gründen müssen das Wasser-Methanol-Glyzerin-Gemisch einerseits und das Methanol-Ölgemisch andererseits getrennt in den Luft-Kraftstoff-Strom eingegeben werden, und zwar dergestalt, daß in einer ersten Stufe ein Nebel aus Wasser, Methanol und Glyzerin dem Luft-Kraftstoff-Gemisch zugegeben wird und die hieraus resultierende Mischung in einer zweiten Stufe mit einem Methanol-Ölgemisch versetzt wird. Hierzu wird hochtemperaturfestes synethetisches Öl verwendet, was eine schmierende Wirkung hat und im übrigen zur Reinigung der Verbrennungskammer beiträgt.

Vorzugsweise sollte die Flüssigkeit einen niedrigen Gefrierpunkt haben, je nach Einsatzort auch unter -25°C, damit sie auch im Winterbetrieb verwendbar ist und nicht einfriert.

Durch die genannten Maßnahmen wird die Ablagerung noch nicht vollständig verbrannter Kohlenwasserstoffe im Brennraum sowie der Ausstoß in den Abgasbereich (Auspuff) im wesentlichen verhindert. Was die Verminderung der Ablagerungen im Brennraum betrifft, so führt diese zusätzlich zu einer erheblichen Reibungsminderung bei der Kolbenbewegung; die Schmierfähigkeit des Öls wird länger erhalten, da das Öl nicht durch unverbrannte Schadstoffe belastet wird. Als Nebeneffekt stellt sich somit der weitere Vorteil ein, daß die Ölwechselintervalle erheblich verlängert werden können. Bei den bisher gebräuchlichen Otto-Motoren führt der Ausstoß unverbrannter Kohlenwasserstoffe und deren Ablagerung im Auspuffbereich auch dazu, daß diese den Gasausstoß behindern. Darüber hinaus sammelt sich zwischen den Verkrustungen leicht Wasser an, was normalerweise zu einem frühzeitigen Durchrosten der Auspufftöpfe führt. Eine Vermeidung der Ablagerungen verlängert somit die Lebensdauer von Auspufftöpfen und Auspuffrohren nicht unerheblich.

Nach einer Weiterbildung der Erfindung besteht die mit organischer Säure versetzte Flüssigkeit zum größten Teil aus destilliertem Wasser. Versuche mit nichtdestilliertem Wasser haben ergeben, daß die darin enthaltenen Verunreinigungen einen schädigenden Einfluß im Verbrennungsmotor haben, der deren Lebensdauer nicht unerheblich vermindert, während reines (neutrales) Wasser die vollständige Verbrennung der Kohlenwasserstoffe fördert. Zur Erzeugung des Flüssigkeitsnebels wird die Flüssigkeit aus einem Vorratsbehälter dosiert in die genannte Zerstäuberkammer gegeben, in der ein etwa stets gleichmäßiger Flüssigkeitsstand besteht.

Verwendet man das mit einer organischen Säure versetzte destillierte Wasser, vermengt mit Alkohol, wird vorzugsweise die Flüssigkeit aus einem einzigen Vorratsbehälter dosiert in eine Zerstäuberkammer abgegeben, in der in etwa ein stets gleichmäßiger Flüssigkeitsstand besteht, wobei in der Flüssigkeit ein poröser Formkörper liegt, durch den über den geringen Druck oberhalb des Flüssigkeitsspiegels Luft von außen angesaugt wird, die die in dem Formkörper befindliche Flüssigkeit aus der übrigen Flüssigkeit feinsttropfenförmig (nebelartig) herauspreßt, und anschließend die Feinsttröpfchen (der Nebel) über ein Regelventil dem Luft-Kraftstoff-Gemisch bzw. dem Kraftstoff beigemengt werden.

Verwendet man einerseits ein Gemisch aus destilliertem Wasser, Methanol und Glyzerin und das Öl-Methanolgemisch andererseits, so wird dies in verschiedenen Vorratsbehältern dosiert in jeweilige Zerstäuberkammern abgegeben. Hierbei wird in dem mit Wasser versehenen Vorratsbehälter ein poröser Formkörper und in dem mit dem Alkohol-Ölgemisch versehener Vorratsbehälter ein mit einem engmaschigen Metallgitter ummantelter Kunststoffkörper mit feineren Kanälen bzw. Austrittsöffnungen verwendet. Aus den jeweils als Zerstäuber dienenden Körpern wird über den geringen Druck oberhalb des Flüssigkeitsspiegels Luft von außen angesaugt, die die in dem Formkörper bzw. dem Kunststoffkörper befindliche Flüssigkeit aus der jeweils übrigen Flüssigkeit feinsttröpfchenförmig (nebelartig) herauspreßt. Anschließend wird der Nebel jeweils über ein zugeordnetes Regelventil dem Luft-Kraftstoff-Gemisch bzw. dem Kraftstoff in verschiedenen Stufen beigemengt.

Das über dem Flüssigkeitsspiegel bestehende (Fast-)Vakuum übt eine Sogwirkung aus, wobei die den Formkörper oder den Kunststoffkörper bzw. deren feinen Kanäle verlassenden Flüssigkeitströpfchen reibungsbedingt feinstzerteilt werden. Die auf die Flüssigkeit ausgeübte Preßwirkung kann bei Benzin-Einspritzmotoren dadurch erhöht werden, daß der Formkörper zusätzlich über eine regelbare Pumpe mit einem Druck beaufschlagt wird. Die angesaugte Luft reißt dann die Flüssigkeitströpfchen mit in den über dem Flüssigkeitsspiegel bestehenden Unterdruckraum. Hierbei bleiben die Flüssigkeitströpfchen elektrisch neutral.

Um schädliche Polarisierungseinflüsse zu vermeiden, die durch etwa in der Außenluft vorhandene Ladungsträger eingeschleust werden, ist nach einer Weiterbildung der Erfindung vorgesehen, daß die angesaugte Luft vorher entladen (neutralisiert) wird. Es versteht sich von selbst, daß die angesaugte Luftmenge jeweils bei der Beimengung der übrigen Luft zu dem Kraftstoff berücksichtigt werden muß. Ferner und nach einer Weiterbildung der Erfindung wird die Luftfeuchtigkeit der Außenumgebung dadurch berücksichtigt, daß eine Membran die Luftzufuhr bei höherer Luftfeuchtigkeit mindert. Diese Minderung ist deshalb vonnöten, weil ansonsten eine zu große Wassermenge in den Verbrennungsraum geleitet werden würde und dort zu einer Abmagerung des Kraftstoff-Gemisches führte.

Vorzugsweise wird die Flüssigkeitsdosierung in die Zerstäuberkammer (Verdampferkammer) durch einen Schwimmer elektromagnetisch gesteuert. Dieser Schwimmer hat in erster Linie die Aufgabe, den Flüssigkeitspegel in der Zerstäuberkammer zu regeln, d.h., für einen im wesentlichen gleichbleibenden Flüssigkeitspegel zu sorgen. Des weiteren sorgt er bei Verbrauch der Flüssigkeit dafür, daß die betreffende Versorgungsleitung abgesperrt wird und das System auf den üblichen Luftansaugbetrieb - wie er nach dem Stand der Technik bekannt ist - umschaltet. Die Luft wird dann ohne Beimengung und Zerstäubung von Flüssigkeit über die Zerstäubungskammer angesaugt.

Um zu verhindern, daß zu große Flüssigkeitsteilchen in das Luft-Benzin-Gemisch geraten, ist weiterhin vorzugsweise vorgesehen, den Flüssigkeitsnebel über einen Tropfenabscheider zu leiten, der vor dem Kammerauslaß angeordnet ist. Vorzugsweise wird hierzu ein feinmaschiges mehrlagiges Sieb verwendet, alternativ wären zickzackförmige Leitflächen mit Prallblechen denkbar, welche die zu großen Tröpfchen durch Prallwirkung ausscheiden bzw. weiter zerkleinern. Die dort festgehaltenen Tröpfchen fallen in das Flüssigkeitsbad der Zerstäuber-(Verdampfer-)Kammer zurück.

Die Feinstzerteilung der Kraftstoff-Tröpfchen wird dadurch bewirkt, daß in einem Diffusorraum der Flüssigkeitsnebelstrom über radiale Einlässe (Düsen) als auch über eine zentrale Düse so auf den Kraftstoffteilchenstrom gelenkt wird, daß die geforderte Scher- bzw. Zerkleinerungswirkung der Kraftstoffteilchen eintritt. Gleichermaßen entsteht inmitten der Zerstäuber-Wirbelkammer eine etwa ringförmige Unterdruckzone, die beschleunigend auf das Flüssigkeitströpfchen-Kraftstoff-Luft-Gemisch wirkt. Die Flüssigkeitszugabe wird hier z.B. durch das Öffnen der Vergaserklappe gesteuert. Die Teilchengeschwindigkeit dürfte mehrere m/sec betragen. Gleichzeitig verhindern die Flüssigkeitsteilchen, die sich anschließend mit dem Luft-Kraftstoff-Gemisch vermengen, daß die kleinen Kraftstofftröpfchen sich zu größeren wieder verbinden.

Zusätzlich - und zwar (zeitlich wie räumlich) vor der Zerstäubung durch die beigemengte Flüssigkeit - kann vorzugsweise der Kraftstoff durch Ultraschallbestrahlung direkt oder indirekt vorzerstäubt werden. Diese Maßnahme allein dürfte jedoch nicht ausreichen, es sei denn, die Wiedervereinigung der Kraftstoffteilchen wird - wie nach der vorliegenden Erfindung - durch neutrale Flüssigkeitströpfchen, vorzugsweise kleineren Durchmessers, verhindert. Die Flüssigkeit hat vor allem auch den detonationshemmenden Charakter, andererseits unterstützt sie die Aufrechterhaltung der Brennflamme bis zu vollständigen Verbrennung der Kraftstoffteilchen. Der Motor arbeitet leise und gleichmäßig. Nicht zuletzt hat die vorzugsweise beigefügte organische Säure auf den Verbrennungsraum eine reinigende Wirkung. Das Gemisch aus Wasser-Ethanol-organischer Säure ist für die Bedienungsperson völlig ungiftig und bei Normaldruck/-temperatur nicht explosiv.

Entsprechendes, wie vorstehend über das aus destilliertem Wasser, einer organischen Säure und Alkohol bestehende Nebelgemisch Ausgesagte, gilt auch für den Fall, daß destilliertes Wasser-Methanol-Glyzerin-Gemisch einerseits und das Methanol-Öl-Gemisch andererseits in getrennten Zerstäuberkammern verwendet werden.

Das Glyzerin wird während der Verbrennung des Kraftstoffes auf die jeweilige Verbrennungstemperatur ohne chemische Reaktion erhitzt und dient als Wärmespeicher im Abgasstrom, der den Verbrennungsraum verläßt. Bringt man in dem Abgasrohr bzw. Abgassammelrohr für mehrere Verbrennungsräume einen netzartigen Diffusor an, so können sich die nur teilweise verbrannten Partikel, ggf. nach Zerstäubung an dem Diffusor, aufgrund der herrschenden Temperaturen zwischen 800 und 1000°C im Diffusorbereich selbst entzünden, wo sie in einer sich ausbildenden Flamme endgültig verbrennen. Diese Nachverbrennung bringt eine zusätzliche CO-Minimierung und hat den Vorteil, daß sie im Vergleich zu einem Katalysator praktisch ohne Leistungseinbuße abläuft.

Es ist bekannt, daß bei herkömmlichem Betrieb eines Verbrennungsmotores die Verbrennung sehr stark von der Motortemperatur bzw. den Motordrehzahlen abhängt. So ist die Verbrennung bei Motoren, wie sie nach dem Stand der Technik bekannt sind, vor allen Dingen im Leerlauf besonders schlecht bzw. dann ist der CO-Gehalt sehr hoch. Daher wird im Leerlaufbetrieb des Motors dieser auch nur mit den genannten Flüssigkeiten betrieben, wozu die Benzin-Zufuhr auch über die Leerlauf-Bypass-Leitung praktisch auf Null gedrosselt wird.

Vorzugsweise sollte jedoch die die organische Säure enthaltende Flüssigkeit bezogen auf die Kraftstoffmenge im Verhältnis von 10 : 1000 bis 15 : 1000 zugegeben werden. Das heißt, daß bei einer Kraftstoffmenge von 1000 l im Durchschnitt etwa nur 1 bis 1,5 l Zusatz-Flüssigkeit benötigt werden, so daß der notwendige Flüssigkeitsvorratsbehältertank nur einen geringen Raum beansprucht und keine aufwendige Vergrößerung des Motorraumes fordert. Entsprechendes gilt für die Verwendung von einem Gemisch aus einem Wasser-Methanol-Glyzerin-Gemisch und dem Methanol/Öl-Gemisch.

Vorzugsweise soll weiterhin bei Drehzahlbeschleunigung des Motors (Kick-down) die angesaugte Luft durch hochfrequentes Öffnen und Schließen eines Einwegventils pulsierend (impulsartig) in die Zerstäuberkammer gegeben werden. Die Frequenz des Ventils beim Öffnen und Schließen liegt im Ultraschallbereich, wodurch eine bessere Zerstäubung der in Rede stehenden Flüssigkeiten in der Zerstäuberkammer erreicht wird.

Weiterhin wird nach dem erfindungsgemäßen Verfahren vorgeschlagen, etwa noch verbleibende Reststoffe, die den Verbrennungsraum unvollständig verbrannt verlassen, in einem Abgasrohr durch Selbstentzündung in einem netzartigen Diffusor nachzuverbrennen, wobei das Glyzerin als Wärmespeicher entsprechend den in dem Verbrennungsraum herrschenden Temperaturen dient.

Die auf die erfindungsgemäße Vorrichtung gerichtete Aufgabe wird durch die Merkmale des Anspruches 13 oder 14 gelöst. Weiterbildungen der erfindungsgemäßen Vorrichtung sind in den Unteransprüchen 15 bis 23 beschrieben.

Wesentliche Teile der Vorrichtung sind ein oder zwei Vorratsbehälter für die Flüssigkeit bzw. Flüssigkeiten, der jeweils hieraus gespeiste Verdampfer bzw. Zerstäuber für die Flüssigkeit sowie eine Zerstäuber-Wirbelkammer mit den bereits oben beschriebenen radialen Zuführungen und der zentralen Zuführung für den Flüssigkeitsnebel sowie ggf. eine Neutralisationsvorrichtung für die angesaugte Luft. Wie bereits oben angesprochen, wird in Abhängigkeit der Betriebsbedingungen des Motors der Flüssigkeitsnebel - mit oder ohne Luft - mit dem Kraftstoff, meist in einer oder zwei Vormischkammern, vermengt.

Die nachfolgenden Ausführungen beziehen sich zunächst nur auf einen Zerstäuber, in dem das mit einer organischen Säure versetzte destillierte Wasser und Alkohol zerstäubt werden.

Der Zerstäuber bzw. Verdampfer für die Flüssigkeit besitzt dabei neben üblicherweise notwendigen Regeleinrichtungen für die Flüssigkeitsbeimengung eine mit dem Vorratsbehälter verbundene Vorkammer mit einem Schwimmer, der mit einem den Flüssigkeitsfluß steuernden Magnetventil verbunden ist. Die eigentliche Verdampfer- bzw. Zerstäuber- (oder auch Atomisier-)Kammer weist einen Unterdruckregler auf, der gleichzeitig als Ausgang bzw. Verbindungsglied zu der bereits erwähnten Zerstäuber-Wirbelkammer dient. Als "Atomisator" für die Flüssigkeit dient ein poröser Formkörper, vorzugsweise ein luft- und flüssigkeitsdurchlässiger gepreßter Verbundkörper, der in der Flüssigkeit in der Zerstäuberkammer eingetaucht ist und der über eine Leitung mit der Außenumgebung verbunden bzw. verbindbar ist. Die genannte Leitung erhält einen weiteren Regler für die Luftzufuhr. Mit anderen Worten, der Formkörper besitzt eine Luftsaugkammer, die mit dem Umgebungsdruck oder ggf. mit einer Pumpe (bei Einspritzmotoren) in Verbindung steht, über die direkt oder indirekt ebenfalls eine Luftzufuhr möglich ist. Während des Motorbetriebes bleibt der Unterdruck in der Zerstäuber-(Verdampfer-)Kammer aufrechterhalten. Vorzugsweise durch die in den Formkörper angesaugte Luft werden die Flüssigkeitsteilchen nicht nur mitgerissen, sondern aufgrund der dünnen Formkörperkanäle reibungsbedingt zerteilt und gelangen somit über den Auslaß in die Zerstäuber-Wirbelkammer, wo sie auf den Kraftstoff-Teilchenstrom treffen. Die größeren Teilchen der Flüssigkeit werden durch einen Tropfenabscheider zurückgehalten und fallen in das Bad der Zerstäuberkammer zurück. Der Unterdruckregler hält nicht nur den Vakuumdruck in der Zerstäuberkammer aufrecht, sondern regelt auch gleichzeitig die Flüssigkeitszugabe zum Kraftstoff. Als weitere Steuereinrichtungen dienen ein Absperrventil zwischen dem Vorratsbehälter und der Vorkammer, welches vorzugsweise taktweise Flüssigkeit in die Vorkammer abgibt, ein zentraler Schalter, der sowohl die Flüssigkeitsentnahme auf dem Vorratsbehälter sowie die Sauerstoffzufuhr in die Zerstäuberkammer bei Abschalten des Motors unterbricht und der ebenfalls die erwähnte Pumpe ausschaltet bzw. einschaltet, wenn die Flüssigkeit verbraucht ist und die Verbrennungsmaschine auf den nach dem Stand der Technik bisher üblichen Betrieb umgeschaltet wird. Ferner schaltet der zentrale Schalter auch den Neutralisator für die von außen angesaugte Luft ein. Vorzugsweise besitzt die Zuleitung zur Zerstäuber-Wirbelkammer noch einen elektronischen Verteiler, der den zentralen Düseneinlaß und die radialen Düsen bzw. deren Zufuhr regelt. Insbesondere vermindert der elektronische Verteiler, daß sich die Flüssigkeitsteilchen vor der Einspritzung in die Zerstäuber-Wirbelkammer unter Bildung größerer Tropfen setzen. Der Zerstäuber-Wirbelkammer-Innenraum ist so gestaltet, daß er zum Aufbau eines turbulenten Strömungsfeldes geeignet ist.

Dabei werden die Kraftstofftröpfchen auf der einen Seite durch ein Bombardement von Teilchen (Tröpfchen) kleineren Durchmessers von außen nach innen wie von innen nach außen zerteilt, mit den Tropfen zu einem weitgehend homogenen Gemisch vermengt und allmählich aufgrund der Sogwirkung in Richtung des Motorzylinders abgeführt. Die Zerstäuber-Wirbelkammer kann demnach sehr kurz ausgeführt sein, z.B. die Dicke einer Vergaserdichtung besitzen, an deren Stelle die Zerstäuber-Wirbelkammer vorzugsweise eingesetzt wird.

Nach einer weiteren Ausgestaltung der Erfindung ist oberhalb der Zerstäuber-Wirbelkammer in vorzugsweise 1,5 bis 2 mm Abstand eine Ultraschallvorrichtung angeordnet, die etwa hochgewirbelte Benzin- und Flüssigkeitsteilchen weiter zerkleinert.

Verwendet man statt dessen Stoffe, die nicht miteinander lösbar sind, wie etwa ein Gemisch aus Methanol, destilliertem Wasser und Glyzerin einerseits und ein Methanol-Ölgemisch andererseits, werden jeweils zwei Zerstäuberkammern und Zerstäuber-Wirbelkammern benötigt. Für das Methanol-Ölgemisch ergibt sich dabei die Besonderheit, daß zu dessen Feinstverteilung/Verdampfung kein poröser Formkörper verwendet wird, sondern ein mit einem Metallgitter bzw. -netz ummantelter etwa 50 mm langer Kunststoffkörper mit feinen Auslaßkanälen nachgeschaltet, so daß auch das Methanol-Ölgemisch hinreichend zerstäubt wird.

Für den Fall, daß Glyzerin verwendet wird, sollte nach einer Weiterbildung der Erfindung dem Verbrennungsraum bzw. den Verbrennungsräumen nachgeschaltete Auspufftrakt einen netzartigen Diffusor aus korrosionsfestem Material aufweisen, in dem eine durch die heißen Abgase selbsttätig ausgelöste Nachverbrennung stattfindet. Die Maschenweite des Diffusors liegt etwa im Bereich von 0,5 bis 3 µm, vorzugsweise 1 bis 2 µm, womit gewährleistet wird, daß die unverbrannten oder nur teilweise verbrannten Kraftstoffpartikel mit noch hohem CO-Gehalt an dem Gewebe aufgesprengt werden und somit die Verbrennungsoberfläche vergrößert wird. Dem Glyzerin kommt in diesem Falle die Wärmeträgerwirkung zu, d.h. in dem Bereich, in dem der Diffusor angeordnet ist, herrschen nach wie vor Abgastemperaturen zwischen 800 und 1000°C, wodurch es zu einer Nachverbrennung kommt. Die Nachverbrennung wird verbessert, wenn die Maschenweite des netzartigen Diffusors zum Austrittsende der Abgas hin kleiner ist als im davorliegenden Teil. Vorzugsweise wird der freie, nicht vom Diffusor-Netz überdeckte Durchströmkanal für das Abgas konkav ausgebildet, wobei sich die gegenüberliegenden konvex ausgestalteten Diffusor-Netzbereiche etwa im mittleren Bereich berühren. Zusätzlich können nach einer Weiterbildung schaufelartige Leitbleche im Diffusor-Netz vorgesehen sein, die sich in Längsrichtung erstrecken und die das Abgas in einer laminaren Strömung durchfluten lassen. Um hohe Temperaturbelastungen des eigentlichen Auspuffrohres zu verhindern, ist das Auspuffrohr im Bereich des Diffusors mit einer inneren feuerfesten Auskleidung versehen. Der Diffusor arbeitet nach dem Prinzip einer Gasleuchte, in deren Gasstrom ein netzartiges Gewebe angeordnet ist, welches eine vollständige Verbrennung gewährleistet, ohne den Nachteil eines hohen mechanischen Widerstandes zu bilden.

Ausführungsbeispiele der Erfindung sind in den Zeichnungen dargestellt und sollen im folgenden näher erläutert werden. Es zeigen
- Fig. 1: eine perspektivische Ansicht der erfindungsgemäßen Vorrichtung zum Nachrüsten eines Benzin-Motors
- Fig. 2: eine schematische Querschnittsansicht der erfindungsgemäßen Vorrichtung,
- Fig. 3 und 4: entsprechende Ausbildungen nach Fig. 1 und 2 mit jeweils doppelten Vorrats-, Zerstäuber- und Zerstäuber-Wirbelkammern,
- Fig. 5 a, b: jeweils einen Ausschnitt aus einem Abgasabführungsrohr mit einem Diffusor im Längsschnitt,
- Fig. 6a bis c: jeweils Querschnittsansichten entsprechend Fig. 5a und
- Fig. 7: einen Querschnitt durch einen Zerstäuber- Kunststoffkörper.

Zum Nachrüsten eines herkömmlichen Benzin-Motors benötigt man einen Vorratsbehälter 1, der über eine flexible Schlauchleitung 22 mit dem Zerstäuber 18 verbunden ist. Von diesem Zerstäuber 18 führt wiederum eine Verbindungsleitung 23 zu der Zerstäuber-Wirbelkammer 13, die an die Stelle der üblicherweise vorhandenen Vergaserdichtung (Dichtungsring) tritt. Die Zerstäuber-Wirbelkammer besteht aus einem gas- und flüssigkeitsdurchlässigen Material, das elektrostatisch nicht aufladbar ist, also neutral bleibt.

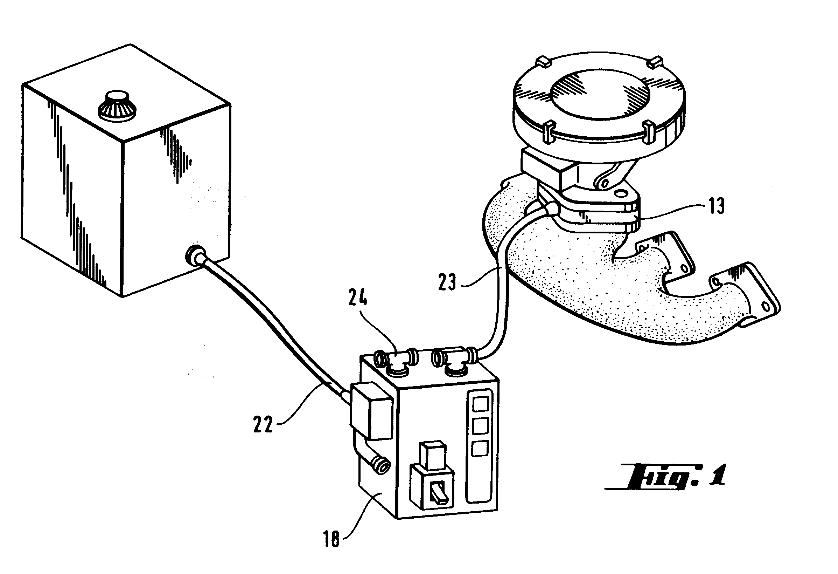

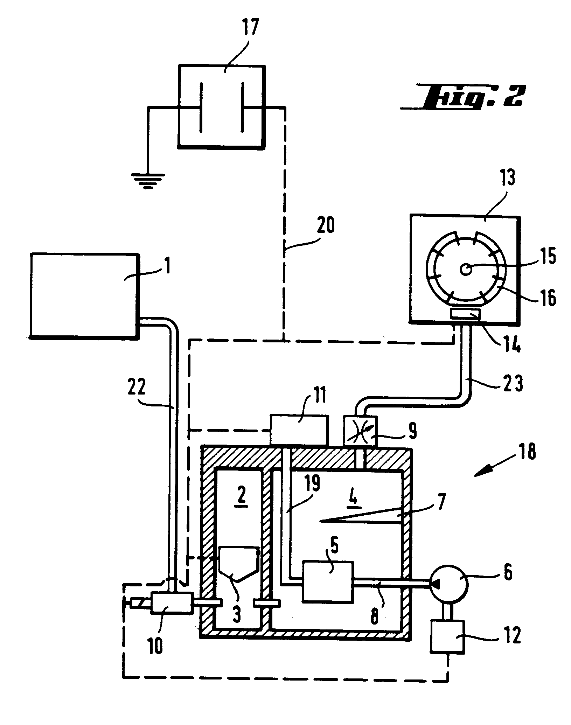

Die zum Betrieb der erfindungsgemäßen Vorrichtung benötigte Luft wird über den Luftansaugstutzen 24 angesaugt, der eine Membran aufweist, die sich bei größerer Außenluftfeuchtigkeit entsprechend schließt und weniger Luft ansaugt. Im einzelnen enthält das Gehäuse 18 die in Fig. 2 dargestellte Vorkammer 2, die mit einem Schwimmer 3 ausgerüstet ist, der dazu dient, den Flüssigkeitsstand in der Zerstäuberkammer 4 zu regeln, die mit der Vorkammer 4 in Verbindung steht. Diese Verbindung kann ggf. - z.B. wenn die neutrale Flüssigkeit aufgebraucht ist - durch den Schwimmer unterbrochen werden. In der Zerstäuberkammer 4 befindet sich ein poröser Formkörper 5, der einerseits mit einer Leitung 19 über einen Regler 11 mit der Außenluft und andererseits über eine Leitung 8 mit einer Pumpe 6 verbunden ist, die von einem weiteren Regler 12 gesteuert wird. Die Zerstäuberkammer 4 besitzt ferner ein zwischen dem porösen Formkörper 5 und dem Unterdruckregler, der gleichzeitig als Auslaßventil der Zerstäuberkammer 4 dient, angeordneten Tropfenabscheider 7, der nur Flüssigkeitstropfen unterhalb eines fest vorgegebenen Durchmessers durchläßt. Des weiteren ist zwischen dem Vorratsbehälter 1 und der Vorkammer 2 ein steuerbares Absperrventil 10 vorgesehen. Entweder in einem Vorraum oder über eine entsprechende Ansaugleitung 20 bzw. den bereits in Fig. 1 erwähnten Ansaugstutzen 24 ist eine Luftansaugung möglich. In diesem Vorraum bzw. der Leitung 20 ist ein Neutralisator eingebaut, der verhindert, daß Ladungsträger in die Zerstäuberkammer 4 gelangen. Über den bereits erwähnten Unterdruckregler 9 und die Schlauchverbindung 23 steht der Zerstäuber 4 mit der Zerstäuber-Wirbelkammer 13 in Verbindung. Diese weist zunächst einen elektronisch gesteuerten Verteiler 14 auf, der sowohl die zentrale Düse 15 als auch radial angeordnete Düsen 16 mit nebelartiger Flüssigkeit derart bedient, daß diese Flüssigkeit auf einen Kraftstoff bzw. Kraftstoff-Luft-Strom gerichtet wird und diesen in noch feinere Kraftstoffteilchen als bisher möglich zerteilt und diese Feinsttröpfchen auch aufrechterhält.

Die erfindungsgemäße Vorrichtung arbeitet folgendermaßen:

Die aus dem Vorratsbehälter 1 über Leitung 22 taktweise mittels des steuerbaren Absperrventils 10 in die Vorkammer 2 gelangende Flüssigkeit aus 2 Teilen destillierten Wasser, 1 Teil Ethanol und, bezogen auf das Wasser, 1 : 300 organische Säure, vorzugsweise eine solche, die reinigend auf den Motorraum wirkt, wird in die Zerstäuberkammer 4 abgegeben, wo sie von dem porösen Formkörper aufgesogen wird. Oberhalb des porösen Formkörpers bzw. oberhalb des Flüssigkeitsspiegels herrscht in der Zerstäuberkammer 4 ein starker Unterdruck, der zu einer "Verdampfung" der Flüssigkeit führt. Da der Außendruck mindestens fünfzehnmal so groß ist wie der Unterdruck in der Zerstäuberkammer 4, gelangt über die Leitung 19 Luft in den Formkörper, welche beim Durchlaufen der feinen Kanäle des Formkörpers 5 die Flüssigkeit mitreißt. Durch die hohe Fließgeschwindigkeit wird die Flüssigkeit durch Reibungseffekte in feine Tröpfchen zerteilt, etwa die Flüssigkeitsoberfläche durchdringende Bläschen unterliegen einer derart großen Scherwirkung, daß sie ebenfalls in viele kleine Bläschen zerplatzen. Dies führt zur Bildung eines Nebels aus feinsten Flüssigkeitströpfchen. Die etwa noch vorhandenen größeren Flüssigkeitströpfchen werden durch den Tropfenabscheider 7 abgefangen und fallen wieder in das Flüssigkeitsbad bzw. auf den Boden der Zerstäuberkammer 4 zurück. Von dem Unterdruckregler wird über die Verbindungsleitung 23 der Flüssigkeitsnebel an den elektronisch gesteuerten Verteiler 14 geführt, wo er an ringförmig angeordnete Düsen 16 sowie eine zentrale Düse 15 dosiert verteilt wird. Die genannten Düsen sind in einer Zerstäuber-Wirbelkammer 13 (Länge etwa 2 bis 5 cm) angeordnet, die vom Kraftstoff bzw. Kraftstoff-Luft-Gemisch durchflossen wird. Treffen die Flüssigkeitströpfchen auf den Kraftstoffstrom mit hoher Geschwindigkeit, so zerteilen sie die Kraftstoffteilchen in feine Tröpfchen mit kleinem Durchmesser. Eine Wiedervereinigung der Tropfen wird dadurch verhindert, daß die Flüssigkeit neutral ist, die sich als "Puffer" zwischen etwa elektrisch geladene Benzintröpfchen befinden. Das aus der Zerstäuber-Wirbelkammer 13 abgeführte Gemisch kann dann in einer Brennkammer, z.B. dem Zylinder eines Otto-Motors, verbrannt werden, wobei die Flüssigkeit die Verbrennung in der Weise unterstützt, daß sie unter Vermeidung einer schlagartigen Detonation bis zur vollständigen Oxidation der Kohlenwasserstoffanteile des Benzins aufrechterhalten wird. Die vollständige Verbrennung ist gleichbedeutend mit einem Minimum an CO-Ausstoß, der selbst bei großvolumigen Motoren weit unterhalb von 0,5 % lag.

Durch die erfindungsgemäßen Maßnahmen werden auch Kohlenstoffablagerungen im Verbrennungsraum vermieden, die in Verbindung mit Feuchtigkeit hoch korrosiv wirken. Ferner werden Kohlenstoffablagerungen auf Kolbenringen vermieden, die in der Regel bisher zur Minderung des Kompressionsdruckes sowie zu einem schnellen Verschleiß des Zylinders geführt haben. Gleiches gilt für die Ventilflächen, die Zündkerze sowie den gesamten Auspufftrakt.

Ein weiterer wesentlicher Nebeneffekt des erfindungsgemäßen Verfahrens ist das Vermeiden des sogenannten Motorklopfens. Die verwendete Flüssigkeit sorgt für eine gleichmäßige Wärmeverteilung im Brennraum und verhindert den Aufbau einer abrupten Verbrennung.

Im bisher durchgeführten Testbetrieb konnten Benzineinsparungen bis zu 35 % sowie reduzierte CO-Werte erreicht werden, die teilweise sogar bei Werten unten 0,05 % lagen.

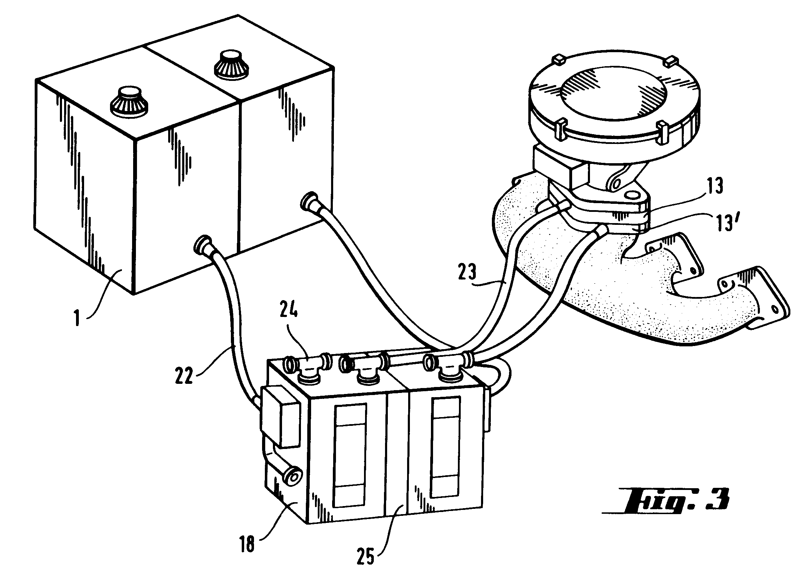

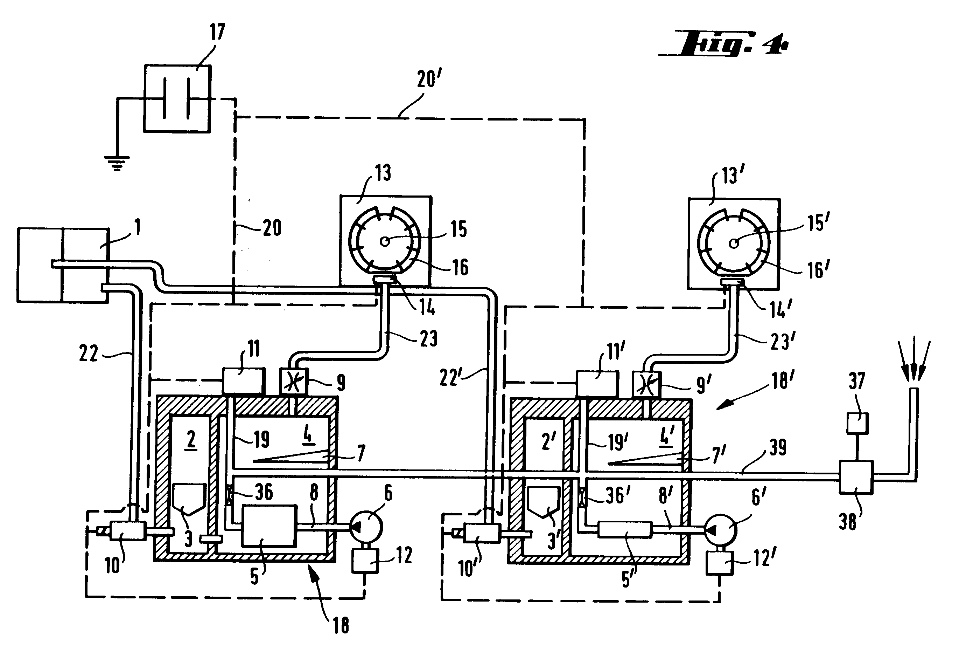

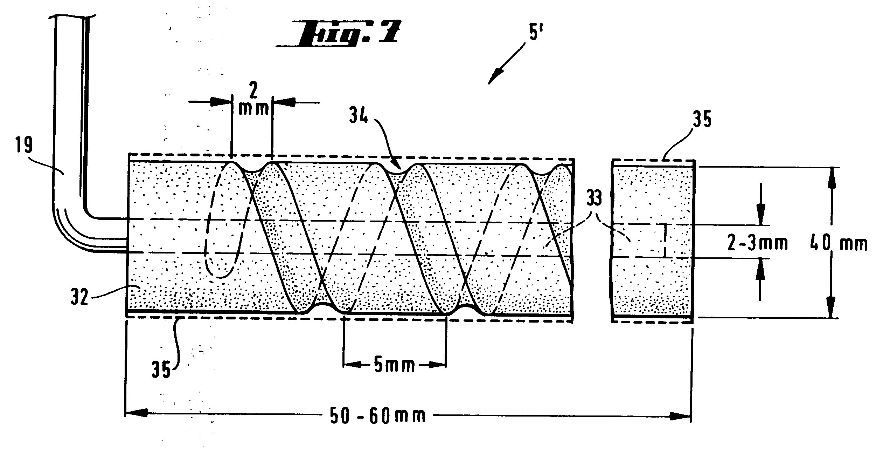

Im Unterschied zur Abbildung in Fig. 1 besitzt die Vorrichtung nach Fig. 3 einen zwei Kammern aufweisenden Vorratsbehälter 1 mit jeweiligen Zuführungsleitungen 22, worüber mittels eines steuerbaren Absperrventils 10 bzw. 10' Flüssigkeiten in die Vorkammern 2 und 2, gelangen. Der Aufbau der Zerstäuberkammern 4 und 4' (siehe Fig. 4) ist jeweils entsprechend mit der Maßgabe, daß statt des porösen Formkörpers 5 ein aus einem mit einem Metallgitter ummantelten porösen Kunststoffkörper 5' vorgesehen ist, der in Fig. 7 näher dargestellt ist. Dieser Körper 5' besteht aus einem porösen, im wesentlichen zylindrischen, im Durchmesser etwa 40 mm großen und etwa 50 bis 60 mm langen Kunststoffblock 32 der eine mittige Sacklochbohrung 33 eines Durchmessers zwischen 2 und 3 mm aufweist, in welche der Lufteintrittskanal (Leitung 19) mündet. Der Kunststoffblock ist mit einem fest aufgespannten Drahtgeflecht (Metallgitter) einer Maschenweite von ca. 0,2 µm ummantelt und weist an seinem Außenmantel ringförmige oder spiralig verlaufende Nuten 34 einer maximalen Breite von 2 mm auf, die im axialen Abstand von 5 mm angeordnet sind. Diese Nut oder Nuten 34 dienen zum Sammeln sich etwa bildender Bläschen. Hierdurch wird dem Umstand Rechnung getragen, daß das Methanol leichter als Wasser verdampft und das Öl den betreffenden Körper 5 nicht zusetzen darf bzw. nicht mit einem aus Mineralen zusammengesetzten Formkörper 5 in chemische Reaktion treten soll. Weiterhin sind die Zerstäuberkammern 4 und 4' über eine Leitung miteinander verbunden, die ein regelbares Klappenventil 24 aufweist, welches über eine elektronische Steuerung 25 bzw. ein Magnetventil betätigt wird.

Während in der ersten Kammer des Vorratsbehälters destilliertes Wasser eingefüllt ist, ist die zweite Kammer des Vorratsbehälters 1 mit einem Methanol-Öl-Gemisch gefüllt. Von beiden Zerstäuberkammern 4 bzw. 4' gelangt der nebelartige Flüssigkeitsdampf in eine jeweilige Zerstäuber-Wirbelkammer 13 bzw. 13', die nacheinander angeordnet sind, so daß dem Luft-Kraftstoff-Gemisch zunächst ein Wassernebel beigegeben wird und anschließend dem daraus resultierenden Gemisch ein Methanol-Öldampf zugegeben wird. Da die betreffenden Vorrichtungsteile Zu- und Abführleitungen einander entsprechen, kann hinsichtlich der Zerstäuberkammern und der Zerstäuber-Wirbelkammern auf vorstehende Ausführungen in entsprechender Weise verwiesen werden.

Weiterhin besitzen die Zuleitungen 19 und 19' ein Einweg-Lippenventil 36 bzw. 36', das bei zusätzlicher Luftzufuhr über Leitung 39 in Schwingungen versetzt wird und die Luft impulsartig an den porösen Formkörper 5 bzw. Kunststoffkörper 5' abgibt. Diese zusätzliche Luftmenge wird zugeführt, sobald über einen Regler 37 das Absperrventil 38 geöffnet wird, welches beim Kick-down des Gashebels eines Pkw-Motors offenstehen soll. Im Leerlauf des Motors oder bei Nichtbelastungszuständen (Bergabfahrten) bleibt das Ventil 38 geschlossen. Gleichzeitig wird beim Leerlaufbetrieb oder unbelasteten Zustand bei Talfahrten eines Pkw die Benzinzufuhr über eine Drosselklappe praktisch auf Null zurückgefahren; auch das Nadelventil im Bypass (Leerlaufdüse) wird geschlossen. In diesen Fällen wird lediglich das aus den Zerstäuberkammern 4, 4' kommende Gemisch verbrannt. Hierbei wird sich insbesondere das Glyzerin auf die NOₓ-Entstehung reduzierend aus.

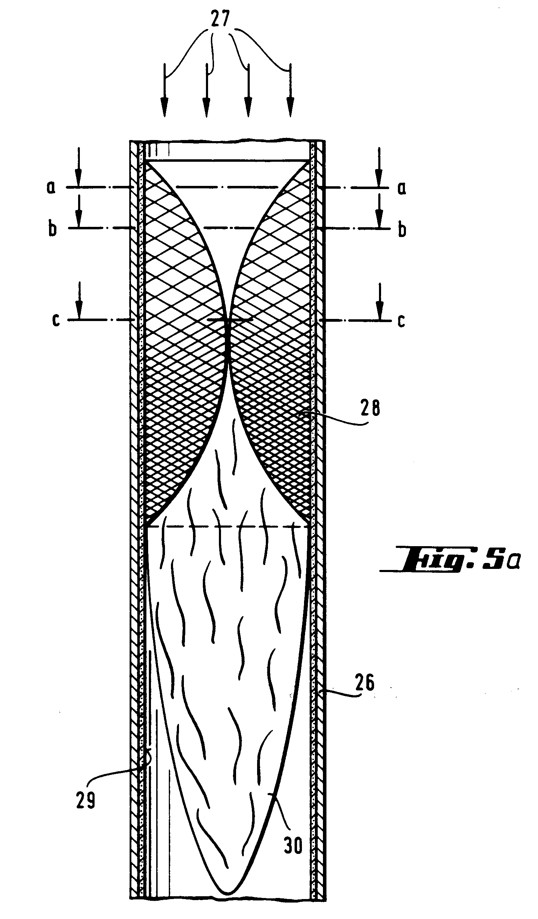

Fig. 5a zeigt einen Längsquerschnitt durch ein Auspuffrohr 26 im unmittelbar an den Verbrennungsraum angrenzenden Bereich.

Die durch die vier Pfeile 27 skizzierten Abgasströme werden gesammelt diesem Auspuffrohr 26 zugeführt, welches einen Diffusor 28 aufweist, der in Abgasrichtung gesehen den gesamten Rohrquerschnitt überstreicht. Wie der Querschnittszeichnung nach Fig. 5a zu ersehen ist, hat der Diffusor einen netzartigen Aufbau, wobei der nicht vom Diffusor überdeckte Raum sich zunächst konisch bis auf Null verjüngt und anschließend eine entsprechende konische Erweiterung erfährt. Der ankommende Abgasstrom, der auf Verbrennungstemperatur erhitztes Glyzerin enthält und der unverbrannte oder nur teilweise verbrannte Partikel mitführt, wird über das Diffusor-Netz geleitet, wobei aufgrund der kleinen Maschenweite, die sich in Richtung des Abgasstromes zum Ausgang hin verdichtet, unverbrannte oder nur teilweise verbrannte Partikel weiterhin zerstäubt werden. Die in diesem Bereich herrschenden hohen Temperaturen führen zu einer Selbstentzündung der unverbrannter Partikel, wodurch sich eine Flamme 30 ausbildet, die sich über den gesamten Diffusor und einen etwa gleich langen Teil erstreckt. Der Diffusor sollte etwa eine Länge von 25 cm haben, so daß sich eine gesamte Flammenlänge von ca. 50 cm ergibt. Zum Schutz des Auspuffrohres 26 ist dieses mit einer feuerfesten Innenverkleidung 29 versehen.

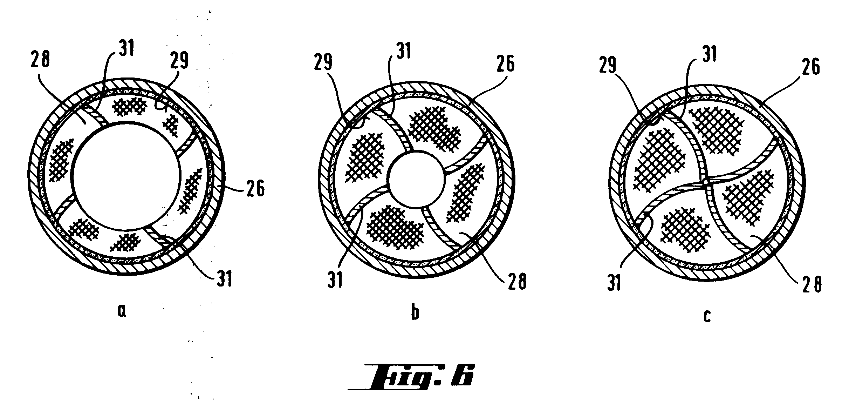

Die Verjüngung des nicht von dem Diffusor-Netz belegten Durchströmraumes ist den Fig. 6a bis c zu ersehen, wobei das Bezugszeichen 28 den jeweiligen Rand des Diffusor-Netzes darstellt.

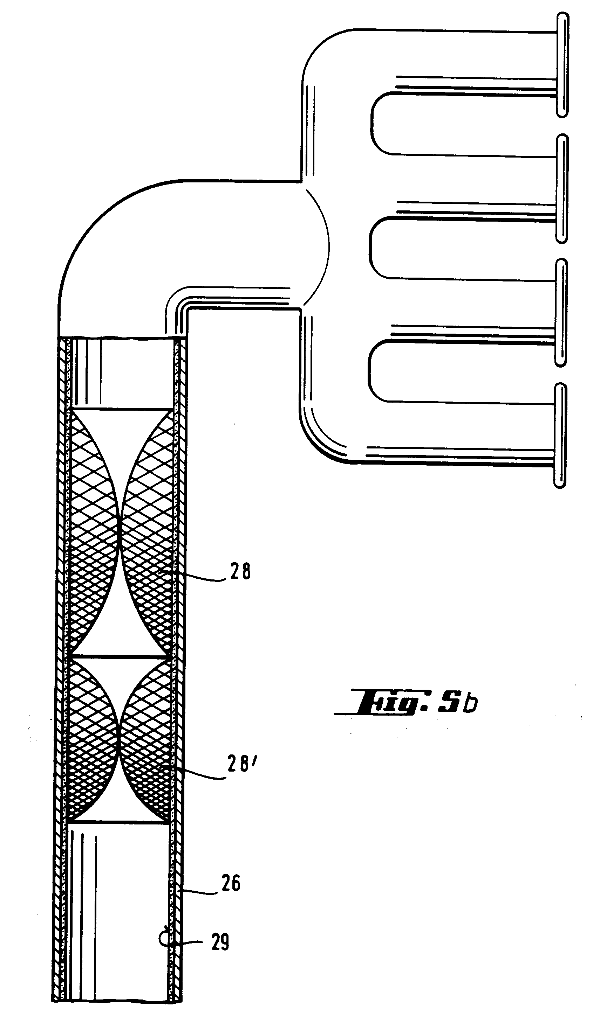

Fig. 5b zeigt eine Ausführungsvariante, bei der ein zweistufiger Diffusor vorgesehen ist. Die erste Stufe entspricht der in Fig. 5a dargestellten, so daß auf diesbezügliche Ausführungen verwiesen werden kann. Diesem Diffusor ist jedoch ein zweiter Teil 28' nachgeschaltet, der entsprechend aufgebaut ist, wobei die Diffusormaschenweite zum Auspuffausgang abnimmt. Der erste Diffusorteil 28 sollte etwa 15 cm lang sein, der zweite Teil 28' ca. 10 cm.

Weiterhin ist aus Fig. 6 zu ersehen, daß mehrere sich in Längsrichtung erstreckende Leitbleche vorgesehen sind, welche die Aufgabe haben, den Abgasstrom möglichst laminar durch den Bereich zu führen, in welchem der Diffusor angeordnet ist.

Mit der in Fig. 3 bis 6 dargestellten Vorrichtung wird vorzugsweise Glyzerin in Abhängigkeit von der eingespeisten Kraftstoffmenge zugegeben. Insbesondere beim sogenannten "Kick-down" ist die zugeführte Glyzerinmenge maximal.

Die Lebensdauer des Diffusors nach Fig. 5 und 6 wird in der Regel zwei Jahre nicht unterschreiten, insbesondere dann nicht, wenn das betreffende Netz aus nichtrostendem Stahl besteht, der ohne Schaden bis ca. 1800°C belastbar ist.

## Patentansprüche

1. Verfahren zur Optimierung der Verbrennung von Kraftstoffen bei minimaler CO-Emission durch vorherige Einführung eines Wasser, Alkohol und mindestens eines weiteren Zusatzstoffes enthaltenden Flüssigkeitsnebels in das Luft-Kraftstoff-Gemisch und Erzeugung eines homogenen Flüssigkeits-Kraftstoff-Luft-Gemisches,
**dadurch gekennzeichnet,**
daß der (entionisierte) neutrale Flüssigkeitsnebel zum größten Teil aus destilliertem Wasser, dem eine schwache organische Säure in einer auf das destillierte Wasser bezogenen Konzentration zwischen 1/500 bis 1/200, vorzugsweise 1/300, beigemengt ist und Alkohol besteht und dem Kraftstoff in einer auf den Kraftstoff bezogenen Menge im Verhältnis von 1 : 1000 bis 15 : 1000, vorzugsweise 10 : 1000 bis 15 : 1000, zugegeben wird, wobei der Flüssigkeitsnebel in Feinsttröpchenform mit dem Kraftstoff-Luft-Gemisch in einem turbulenten Strömungsfeld vermischt wird oder
daß der (entionisierte) neutrale Flüssigkeitsnebel aus einem Gemisch von gleichen Anteilen einerseits von etwa gleich großen Mengen Wasser und Methanol mit 200 bis 300 g Glyzerin auf 4,5 l Wasser/Methanol und andererseits einem Methanol-Ölgemisch im Verhältnis 200 bis 400 g, vorzugsweise 300 g, Öl auf 5 l Methanol besteht und dem Kraftstoff in einer auf den Kraftstoff bezogenen Menge im Verhältnis von 1 : 1000 bis 15 : 1000, vorzugsweise 10 : 1000 bis 15 : 1000, zugegeben wird, wobei der Flüssigkeitsnebel in Feinsttröpchenform mit dem Kraftstoff-Luft-Gemisch in einem turbulenten Strömungsfeld vermischt wird.

2. Verfahren nach Anspruch 1, dadurch gekennzeichnet, daß die mit der organischen Säure versetzte Flüssigkeit auf zwei Volumenteile destilliertes Wasser einen Volumenteil Alkohol, vorzugsweise niederkettige Alkohole oder die mit Glyzerin versetzte Flüssigkeit eine Mischung aus 2,5 Vol. Teilen Wasser, 2 Teilen Methanol und 200 bis 300 g Glyzerin, enthält.

3. Verfahren nach einem der Ansprüche 1 oder 2, dadurch gekennzeichnet, daß Methanol und/oder Ethanol verwendet wird, daß das Öl ein synthetisches Öl mit hoher Verdampfungstemperatur ist.

4. Verfahren nach einem der Ansprüche 1 bis 3, dadurch gekennzeichnet, daß die Flüssigkeit in einer Kammer mit einem 20 bis 30 % unter dem Außendruck liegenden Druck zerstäubt wird, bevor sie dem Luft-Kraftstoff-Gemisch beigegeben wird, wobei vorzugsweise die aus mit einer organischen Säure versetztem Wasser und Alkohol bestehende Flüssigkeit aus einem Vorratsbehälter dosiert in eine Zerstäuberkammer abgegeben wird, in der ein in etwa stets gleichmäßiger Flüssigkeitsstand besteht, wobei in der Flüssigkeit ein poröser Formkörper liegt, durch den über den geringen Druck oberhalb des Flüssigkeitsspiegels Luft von außen angesaugt wird, die die in dem Formkörper befindliche Flüssigkeit aus der übrigen Flüssigkeit feinsttropfenförmig (nebelartig) herauspreßt, und anschließend die Feinsttröpfchen (der Nebel) über ein Regelventil dem Luft-Kraftstoff-Gemisch bzw. dem Kraftstoff beigemengt werden.

5. Verfahren nach einem der Ansprüche 1 bis 3, dadurch gekennzeichnet, daß die Mischung aus destilliertem Wasser, Methanol und Glyzerin einerseits und das Öl-Methanol-Gemisch andererseits in verschiedenen Vorratsbehältern dosiert in jeweilige Zerstäuberkammern abgegeben werden, wobei in dem mit Wasser, Methanol und Glyzerin versehenen Vorratsbehälter ein poröser Formkörper (Sprudelstein) und in dem mit dem Alkohol-Öl-Gemisch versehenen Vorratsbehälter ein poröser, mit einem Metallgitter ummantelter Kunststoffkörper liegen, durch die über den geringen Druck oberhalb des Flüssigkeitsspiegels Luft von außen angesaugt wird, die die in dem Formkörper bzw. dem Kunststoffkörper befindliche Flüssigkeit aus der jeweils übrigen Flüssigkeit feinsttröpfchenförmig (nebelartig) herauspreßt und anschließend die Feinsttröpfchen (Nebel) über ein jeweiliges Regelventil dem Luft-Kraftstoff-Gemisch bzw. dem Kraftstoff beigemengt werden.

6. Verfahren nach Anspruch 4 oder 5, dadurch gekennzeichnet, daß die angesaugte Luft vorher entladen (neutralisiert) wird und/oder daß die Luftzufuhr, vorzugsweise durch eine Membran, derart geregelt wird, daß die Luft zufuhr bei höherer Luftfeuchtigkeit gemindert wird.

7. Verfahren nach einem der Ansprüche 1 bis 6, dadurch gekennzeichnet, daß die Flüssigkeits-Dosierung in die jeweilige Zerstäuberkammer über einen Schwimmer elektromagnetisch gesteuert wird.

8. Verfahren nach einem der Ansprüche 5 bis 7, dadurch gekennzeichnet, daß der Formkörper bzw. der Kunststoffkörper zusätzlich über eine regelbare Pumpe mit Druck beaufschlagt wird, der dem Druck entspricht, mit dem Kraftstoff über eine Einspritzdüse eingespritzt wird.

9. Verfahren nach einem der Ansprüche 1 bis 8 dadurch gekennzeichnet, daß bei Drehzahlbeschleunigung des Motors die angesaugte Luft durch hochfrequentes (Ultraschallbereich) Öffnen und Schließen eines Einwegventils pulsierend (impulsartig) in die Zerstäuberkammer gegeben wird.

10. Verfahren nach einem der Ansprüche 4 bis 9, dadurch gekennzeichnet, daß die nebelartige Flüssigkeit über einen Tropfenabscheider, vorzugsweise ein feinmaschiges Sieb, geführt wird, der bzw. das nur Tropfen unterhalb des durch die Maschenweite festgelegten Durchmessers, vorzugsweise unter 0,3 mm, durchläßt, bevor sie unter Erzeugung eines turbulenten Strömungsfeldes dem Luft-Kraftstoff-Gemisch beigemengt wird und/oder daß der Flüssigkeits-Nebel, ggf. jeweils, über einen zentralen sowie radiale Einlässe (Düsen) in einen Diffusorraum unter Erzeugung eines turbulenten Strömungsfeldes derart eingeblasen wird, daß die auf die Kraftstoffteilchen auftreffenden Nebeltröpfchen die Kraftstoffteilchen (mechanisch) zerteilen und sich mit den zerkleinerten Kraftstoffteilchen derart durchmischen, daß eine Wiedervereinigung der Kraftstoffteilchen zu Tröpfchen größeren Durchmessers verhindert wird.

11. Verfahren nach einem der Ansprüche 1 bis 10, dadurch gekennzeichnet, daß der Kraftstoff vor oder bei dem Eindüsen des Flüssigkeitsnebels durch Ultraschall (vor-)zerstäubt wird, vorzugsweise indem die als Prallblech für die Kraftstoffteilchen dienende Vergaserklappe mit Ultraschall bestrahlt wird.

12. Verfahren nach einem der Ansprüche 1 oder 3 bis 11, da durch gekennzeichnet, daß in einer ersten Stufe ein aus destilliertem Wasser, Methanol und Glyzerin bestehender Flüssigkeitsnebel und in einer zweiten Stufe der aus einem Alkohol-Öl-Gemisch bestehende Flüssigkeitsnebel dem Kraftstoff bzw. Kraftstoff-Luft-Gemisch eingeblasen wird und/oder daß die den Verbrennungsraum verlassenden unvollständig verbrannten Kraftstoffteilchen in einem Abgasrohr durch Selbstentzündung in einem netzartigen Diffusor nachverbrannt werden, wobei das Glyzerin als Wärmespeicher entsprechend den in dem Verbrennungsraum herrschenden Temperaturen dient.

13. Vorrichtung zur Durchführung des Verfahrens nach einem der Ansprüche 1 bis 12, mit einem dem Vergaser oder einer Vormischkammer des Motors vorgeschalteten Zerstäuber (18) für eine Flüssigkeit der im wesentlichen mindestens ein Vorratsbehälter (1) für die Flüssigkeit, eine Vorkammer (2) mit einem Schwimmer (3), der mit einem den Flüssigkeitsnebelfluß steuernden Magnetventil verbunden ist, und mindestens eine Zerstäuberkammer (4) besitzt, die mindestens einer Zerstäuber-Wirbelkammer (13) zur Vermischung des Flüssigkeitsnebels mit dem Luft-Kraftstoffgemisch bzw. Kraftstoff verbunden ist, wobei die Zerstäuber-Wirbelkammer (13) eine Zuführung (Düse 16) für den Flüssigkeitsnebel aufweist, die so gerichtet ist, daß sie weitgehend senkrecht auf den Luft-Kraftstoff-Gemisch- bzw. den Kraftstoff-Strom trifft, dadurch gekennzeichnet, daß die Zerstäuberkammer (4) einen Unterdruckregler (9) besitzt, daß in die in der Zerstäuberkammer (4) anstehende Flüssigkeit ein poröser Formkörper (5), vorzugsweise ein luft- und flüssigkeitsdurchlässiger gepreßter Verbundkörper, mit einer Porosität bis zu 60 %, vollständig eingetaucht ist, der über eine einen Regler (11) aufweisende Leitung (19) mit der Außenumgebung (Luft) verbunden bzw. verbindbar ist und daß der Zerstäuber-Wirbelkammer in der Kraftstoffzuführleitung eine Ultraschallquelle vorgeschaltet ist.

14. Vorrichtung zur Durchführung des Verfahrens nach einem der Ansprüche 1 bis 12, mit einem dem Vergaser oder einer Vormischkammer des Motors vorgeschalteten Zerstäuber (18, 18') für eine Flüssigkeit der im wesentlichen mindestens ein Vorratsbehälter (1) für die Flüssigkeit, eine Vorkammer (2, 2') mit einem Schwimmer (3, 3'), der mit einem den Flüssigkeitsnebelfluß steuernden Magnetventil verbunden ist, und mindestens eine Zerstäuberkammer (4, 4') besitzt, die mindestens einer Zerstäuber-Wirbelkammer (13, 13') zur Vermischung des Flüssigkeitsnebels mit dem Luft-Kraftstoffgemisch bzw. Kraftstoff verbunden ist, wobei die Zerstäuber-Wirbelkammer (13, 13') eine Zuführung (Düse 16, 16') für den Flüssigkeitsnebel aufweist, die so gerichtet ist, daß sie weitgehend senkrecht auf den Luft-Kraftstoff-Gemisch- bzw. den Kraftstoff-Strom trifft, dadurch gekennzeichnet, daß zwei Vorratsbehälter oder ein Vorratsbehälter (1) mit zwei Kammer, zwei jeweils einen Unterdruckregler (9, 9') aufweisende Zerstäuberkammern (4, 4') und zwei Zerstäuber-Wirbelkammern (13, 13') vorgesehen sind, wobei in die in die erste Zerstäuberkammer (4) anstehende Flüssigkeit ein poröser Formkörper (5), vorzugsweise ein luft- oder flüssigkeitsdurchlässiger gepreßter Verbundkörper, mit einer Porosität bis zu 60 %, vollständig eingetaucht ist, der über eine einen Regler (11) aufweisende Leitung (19) mit der Außenumgebung (Luft) verbunden bzw. verbindbar ist und in der zweiten Zerstäuberkammer (4') ein mit einem korrosionsfesten Metallgitter (35) ummantelter Kunststoffkörper (32) vorgesehen ist, der ebenfalls über eine einen Regler (11') aufweisende Leitung (19') mit der Außenumgebung (Luft) verbunden bzw. verbindbar ist und daß jeder Zerstäuber-Wirbelkammer (13, 13') in der Kraftstoffzuführleitung eine Ultraschallquelle vorgeschaltet ist.

15. Vorrichtung nach Anspruch 13 oder 14, dadurch gekennzeichnet, daß die Zuführungen (Düsen 16, 16'; 15, 15,) über einen Druckregler (9, 9') und einen elektronisch gesteuerten Verteiler (14, 14') mit dem Zerstäuber (18, 18') verbunden sind und/oder daß zwischen dem Vorratsbehälter (1) und der Vorkammer (2, 2') ein steuerbares Absperrventil (10, 10') vorgesehen ist, das vorzugsweise taktweise Flüssigkeit in die Vorkammer (2, 2) abgibt.

16. Vorrichtung nach einem der Ansprüche 13 bis 15, dadurch gekennzeichnet, daß der Schwimmer (3, 3') den Zufluß zwischen der Vorkammer (1) und der Zerstäuberkammer (4, 4') abriegelt, wenn keine Flüssigkeit mehr aus dem Vorratsbehälter (1) abgebbar ist bzw. der Flüssigkeitsstand in der Vorkammer (2, 2') einen vorgebbaren Level unterschreitet und/oder daß die Luftzufuhrleitungen (19, 19') jeweils mit einem Einweg-Lippen-Ventil (36) ausgestattet sind, vorzugsweise daß in unmittelbarer Näher der Ventile (36, 36') eine weitere, ein mit einem von einem Regler (37) betätigbaren Absperrventil (38) versehene Luftansaugleitung (39) in die Leitungen (19, 19') mündet, wodurch über Leitung (39) angesaugte Luft die Ventile (36, 36') in hochfrequente Schwingungen im Ultraschallbereich versetzt.

17. Vorrichtung nach Anspruch 16, dadurch gekennzeichnet, daß in den Formkörper (5) und/oder in den Kunststoffkörper (5') eine weitere, mit einer regelbaren Pumpe (6, 6') verbundene Luftansaug-Leitung (8, 8') mündet.

18. Vorrichtung nach einem der Ansprüche 13 bis 17, dadurch gekennzeichnet, daß vor dem Zerstäuberausgang bzw. dem Druckregler (9, 9') ein Tropfenabscheider (7, 7') für solche Tröpfchen vorgesehen ist, die eine (bestimmte) Größe von maximal 0,3 mm überschreiten, vorzugsweise ein mechanisches mehrlagiges Maschensieb (7, 7') und/oder daß im Luftansaugkanal (19, 19') oder einem Vorraum (20, 20') des Zerstäubers (4, 4') ein Neutralisator (17), vorzugsweise ein Kondensator, vorgesehen ist, wobei vorzugsweise daß sämtliche Regler bzw. Ventile und Verteiler (3, 9, 10, 11, 12, 14, 24, 25 und 36 bis 38) über eine zentrale Steuerung miteinander verbunden sind.

19. Vorrichtung nach einem der Ansprüche 13 bis 18, dadurch gekennzeichnet, daß die Zerstäuber-Wirbelkammer zweistufig aufgebaut ist, wobei jede Stufe mit einem Vorratsbehälter (1) verbunden ist.

20. Vorrichtung nach einem der Ansprüche 13 bis 19, dadurch gekennzeichnet, daß die Ultraschallquelle auf die als Prallblech für den Kraftstoff dienende Vergaserklappe gerichtet ist, wobei vorzugsweise die Ultraschallquelle unmittelbar über der Zerstäuber-Wirbelkammer, vorzugsweise in 1,5 mm bis 2 mm Abstand, angeordnet ist.

21. Vorrichtung nach einem der Ansprüche 13 bis 20, dadurch gekennzeichnet, daß zwei Zerstäuber-Wirbelkammern (13, 13') vorgesehen sind, durch die in der ersten Stufe (13) ein Nebel aus einem Wasser-Methanol-Glyzerin-Gemisch und in der zweiten Stufe (13') ein Methanol-Öl-Gemischnebel dem Kraftstoff bzw. Kraftstoff-Luft-Gemisch eingeblasen wird und daß dem oder den Verbrennungsräumen ein von den Abgasen (27) durchströmtes Auslaßrohr (Auspuff) nachgeordnet ist, das einen netzartigen, den gesamten Rohrquerschnitt überdeckenden Diffusor (28) aus korrosionsfestem Material, insbesondere nichtrostendem Stahl, aufweist, in dem eine durch die heißen Abgase (27) selbsttätig ausgelöste Nachverbrennung stattfindet, wobei vorzugsweise die zwischen 0,5 und 3 µm liegende Maschenweite des netzartigen Diffusors (28) zum Austrittsende der Abgase hin kleiner ist als im davorliegenden Teil und/oder die Maschenweite zum Abgasaustrittsende hin halb so klein ist wie im ersten Teil.

22. Vorrichtung nach Anspruch 21, dadurch gekennzeichnet, daß der freie, nicht vom Diffusor-Netz (28) überdeckte Durchströmkanal für das Abgas (27) konkav ausgebildet ist, wobei sich die gegenüberliegenden konvex ausgestalteten Diffusor-Netzbereiche etwa im mittleren Bereich und/oder wobei sich zwei in Abgas-Auslaßrohr in Reihe unmittelbar hintereinander angeordnete gegenüberliegende konvex ausgestaltete Diffusor-Netzbereiche jeweils etwa im mittleren Bereich berühren, vorzugsweise derart daß - in Ausströmrichtung gesehen - der erste Diffusor-Netz-Bereich einschließlich etwaiger Stabilisierungsbefestigungen oder Leitbleche aus Nicht-rostendem Stahl, der darauffolgende Bereich aus einer nicht rostenden Stahllegierung mit Cu-Anteilen und der letzte Teil aus einer reinen Cu-Legierung besteht.

23. Vorrichtung nach einem der Ansprüche 21 oder 22, dadurch gekennzeichnet, daß schaufelartige Leitbleche (31) im Diffusor-Netz vorgesehen sind, die das Abgas in einer laminaren Strömung durchfluten lassen und das Diffusor-Netz (28) stützen und/oder daß das Auspuffrohr (26) im Bereich des Diffusors (28) und in einem etwa gleich langen nachfolgenden Bereich mit einer feuerfesten Auskleidung (29) versehen ist.

## Claims

1. Process for optimizing the combustion of fuel with a minimum CO-emission by prior introduction into the air-fuel mixture of a fluid mist containing water, alcohol and at least a further supplement material and by creating a homogeneous fluid-fuel mixture, characterized in that the (deionized) neutral fluid mist consists for the most part of distilled water to which a weak organic acid is admixed in concentration between 1/500 to 1/200, preferably 1/300 with respect to the distilled water, and alcohol and which is added to the fuel in a proportion of 1 : 1000 to 15 : 1000 preferably 10 : 1000 to 15 : 1000 with respect to the amount of fuel, whereby the fluid mist dispersed in ultimate fine particles is mixed with the fuel-air mixture in a turbulent flow field
or
that the (deionized) neutral fluid mist consists of a mixture consisting in equal parts of approximately equal amounts of water and methanol with 200 to 300 g glycerine to 4,5 l water/methanol on the one hand, and a methanol-oil mixture on the other hand in a proportion of 200 to 400 g, preferably 300 g of oil to 5 l of methanol, and which is added to the fuel in a proportion of 1 : 1000 to 15 : 1000 preferably 10 : 1000 to 15 : 1000 with respect to the amount of fuel, whereby the fluid mist dispersed in ultimate fine particles is mixed with the fuel-air mixture in a turbulent flow field.

2. Process according to claim 1, characterized in that the liquid treated with the organic acid contains one part by volume of alcohol preferably short-chain alcohols, to two parts by volume of distilled water or that the liquid treated with glycerine contains a mixture of 2.5 parts by volume water, 2 parts methanol and 200 to 300 g glycerine.

3. Process according to one of the claims 1 or 2, characterized in that methanol and/or ethanol are used and that the oil is an synthetic oil with high evaporation temperature.

4. Process according to one of the claims 1 to 3, characterized in that the liquid is atomized in a chamber with a pressure of 20 to 30 % below atmospheric pressure before it is admixed to the air-fuel mixture, whereby preferably the liquid consisting of water treated with an organic acid and alcohol is metered out from a supply tank and introduced into an atomizer chamber where an almost constant liquid level exists, whereby a porous sectional body is immersed in the liquid through which air is aspired from the outside due to the low pressure existing above the liquid level, whereby it presses fine ultimate (mist-like) drops out of the remaining liquid and subsequently these ultimate fine drops (the mist) are admixed to the air-fuel mixture, respectively to the fuel via a check valve.

5. Process according to one of the claims 1 to 3, characterized in that the mixture of distilled water, methanol and glycerine on the one hand and the oil-methanol mixture on the other hand are metered out from separate supply tanks into each of the respective atomizer chambers, whereby in the supply tank provided with water, methanol and glycerine a porous sectional body (bubble stone) is lying, while in the supply tank provided with the alcohol-oil mixture a porous plastic body surrounded by a metallic grid is provided, through these air from the outside being aspired due to the low pressure above the liquid level, therby pressing out the liquid in the sectional body, respectively the plastic body from the respective remaining liquid in very fine (mist-like) droplets and subsequently these ultimate fine droplets (mist) are admixed to the air-fuel mixture, respectively the fuel via the respective check valve.

6. Process according to claim 4 or 5, characterized in that the aspired air is previously discharged (neutralized) and/or that the air supply, preferably through a diaphragm, is controlled so that the air.supply is reduced when the air humidity is higher.

7. Process according to one of the claim 1 to 6, characterized in that the metering of the liquid into the respective atomizer chamber is electromagnetically controlled by means of a float.

8. Process according to one of the claims 5 to 7, characterized in that the sectional body, respectively the plastic body are additionally actuated by pressure coming from an adjustable pump, which pressure corresponds to the pressure of the fuel injected through an injection nozzle.

9. Process according to one of the claims 1 to 8, characterized in that when the engine speed increases, the aspired air is introduced pulsating (pulse-like) into the atomizer chamber through high-frequency (ultrasound range) opening and closing of a one-way valve.

10. Process according to one of the claims 4 to 9, characterized in that the mist-like fluid is directed over a droplet separator, preferably a finely meshed screen, so that only drops with a diameter smaller than the one defined by the mesh width, preferably less than 0.3 mm, are allowed to pass, before they are admixed to the air-fuel mixture in a turbulent flow field and/or that the liquid mist is blown in optionally over each a central as well as radial inlets (nozzles) into a diffuser chamber by generating a turbulent flow field so that the mist particles impacting the fuel particles (mechanically) disperse the fuel particles and are mixed together with the dispersed fuel particles in such a manner that a recombination of the fuel particles to drops of a larger diameter is prevented.

11. Process according to one of the claims 1 to 10, characterized in that the fuel is (pre-) atomized by ultrasound prior to or during the nozzle injection of the liquid mist, preferably in that the carburetor flap serving as baffle plates for the fuel particles is exposed to ultrasound.

12. Process according to one of the claims 1 or 3 to 11, characterized in that in a first stage a liquid mist consisting of distilled water, methanol and glycerine and in a second stage a liquid mixture consisting of a alcohol-oil mixture is blown into the fuel or the fuel-air mixture and/or that the incompletely burnt fuel particles leaving the combustion chamber are subjected to afterburning through self-ignition in a netlike diffuser, whereby the glycerine serves as a heat storage corresponding to the temperatures existing in the combustion chamber.

13. Device for implementing the process according to one of the claims 1 to 12, with an atomizer (18) for a liquid, mounted upstream of the carburetor or of a premixing chamber of the engine, said atomizer (18) basically has at least one supply tank (1) for the liquid(s), a precombustion chamber (2) with a float (3) connected to a solenoid valve controlling the flow of liquid mist and at least one atomizer chamber (4) connected to at least one atomizer-eddy chamber (13) for mixing the liquid mist with the air-fuel mixture, respectively the fuel, whereby the atomizer-eddy chamber (13) has an inlet (nozzles 16) for the liquid mist arranged in such a manner that their impact on the air-fuel mixture flow or the fuel flow is largely vertically, characterized in that the atomizer chamber has an underpressure control unit (9), that a porous sectional body, preferably an air and liquid permeable pressed composite body, having a porosity of up to 60 % is completely immersed in the liquid existing in the first atomizer chamber (4), this body being connected or connectable with the environment (air) via pipe (19) provided with a control mechanism (11), and that a ultrasound source is mounted upstream of the atomizer-eddy chamber (13) in the fuel-supply-line.

14. Device for implementing the process according to one of the claims 1 to 12, with an atomizer (18, 18') for a liquid, mounted upstream of the carburetor or of a premixing chamber of the engine, said atomizer (18, 18') basically has at least one supply tank (1) for the liquid(s), a precombustion chamber (2, 2') with a float (3, 3') connected to a solenoid valve controlling the flow of liquid mist and at least one atomizer chamber (4, 4') connected to at least one atomizer-eddy chamber (13, 13') for mixing the liquid mist with the air-fuel mixture, respectively the fuel, whereby the atomizer-eddy chamber (13, 13') has an inlet (nozzles 16, 16') for the liquid mist arranged in such a manner that their impact on the air-fuel mixture flow or the fuel flow is largely vertically, characterized in that two supply tanks or one supply tank (1) with two chambers, two atomizer chambers (4, 4') each having an underpressure control unit and two atomizer-eddy chambers (13, 13') are provided, whereby a porous sectional body, preferably an air and liquid permeable pressed composite body, having a porosity of up to 60 % is completely immersed in the liquid existing in the first atomizer chamber (4), this body being connected or connectable with the environment (air) via pipe (19) provided with a control mechanism (11) and in the second atomizer chamber (4') a plastic body (32) covered by corrosion-resistant metallic grid (35) is provided which is also connected or connectable with the environment (outer air) via pipe (19') equipped with a control mechanism (11') and that ultrasound sources are mounted upstream of each atomizer-eddy chamber (13, 13').

15. Device according to claim 13 or 14, characterized in that the inlets (nozzles 16, 16'; 15, 15') are connected with the atomizer (18, 18') via a pressure control unit (9, 9') and an electronically controlled distributor (14, 14') and/or that between the supply tank (1) and the precombustion chamber (2, 2') a controllable shut-off valve (10, 10') is provided, which preferably dispenses liquid to the precombustion chamber (2, 2') in a timed manner.

16. Device according to one of the claims 13 to 15, characterized in that the float (3, 3') closes off the supply flow between the prechamber (1) and the atomizer chamber (4, 4') when there is no more liquid to be despensed in the supply tank (1), respectively when the liquid level in the precombustion chamber (2, 2') falls below a predetermined level and/or that the air-intake pipes (19, 19') are each equipped with a one-way lip valve (36), preferably that in the immediate vicinity of the valves (36, 36') a further air-intake pipe (39) provided with a shut-off valve (38) triggered from a control unit (37) ends in the pipes (19, 19'), whereby through pipe (39) the aspired air sets the valves (36, 36') into high-frequency vibrations within the ultrasound range.

17. Device according to one of the claims 13 to 16, characterized in that in the sectional body (5) and/or in the plastic body (5') ends a further air-intake pipe (8, 8') connected with an adjustable pump (6, 6').

18. Device according to one of the claims 13 to 17, characterized in that before the atomizer outlet, respectively the pressure control unit (9, 9'), a droplet separator (7, 7') preferably a mechanical multilayered meshed screen (7, 7') is provided for those droplets which surpass a (certain) size of preferably a maximum of 0.3 mm and/or that in the air-suction channel (19, 19') or a prechamber (20, 20') of the atomizer (4, 4') a neutralizer (17), preferably a condenser, is provided, whereby preferably all control units, respectively valves and distributors (3, 9, 10, 11, 12, 14, 24, 25 and 36 to 38) are interconnected via a central control.

19. Device according to one of the claims 13 to 18, characterized in that the atomizer-eddy chamber has a two-stage construction, whereby each stage is connected with a supply tank (1).

20. Device according to one of the claims 13 to 19, characterized in that the ultrasound source is directed onto the carburetor flap serving as a baffle plate for the fuel, whereby preferably the ultrasound source is arranged immediately above the atomizer-eddy chamber, preferably at a distance of 1.5 to 2 mm.

21. Device according to one of the claims 13 to 20, characterized in that two atomizer-eddy chambers (13, 13') are provided, through which in the first stage (13) a mist produced from a water-methanol-glycerine mixture and in the second stage (13') a methanol-oil-mixture mist is blown into the fuel respectively the fuel-air mixture and the downstream of the combustion chamber or chambers an outlet pipe (exhaust) traversed by the exhaust gases (27) is provided, which has a netlike diffuser (28) of corrosion-resistant material, particularly of stainless steel, covering the entire cross section of the pipe, wherein an afterburning triggered by the self-ignition of the hot exhaust gases (27) takes place, the mesh width of the netlike diffuser (28) ranging between 0.5 and 3 µm is smaller towards the outlet end of the exhaust gases than in the preceding portion and/or the mesh width towards the outlet end is half as small than in the first portion.

22. Device according to claim 21, characterized in that the free passage channel for the exhaust gases (27) which is not covered by the diffuser net (28) is concavely shaped, whereby the oppositely located, convexly shaped diffuser net areas touch each other approximately in the middle and/or whereby in two exhaust gas pipes arranged in succession immediately one after the other, two opposite convexly shaped diffuser net areas touch each other approximately in the middle, preferably so that - when considered in the direction of outflow - the first diffuser net area including possible stabilization fastenings or guide plates is made of stainless steel, the following portion of a rustproof steel alloy with Cu-content and the last protion of a pure Cu-alloy.

23. Device according to one of the claims 21 or 22, characterized in that in the diffuser net shovel-like guide plates (31) are provided, which allow the exhaust gases to pass in a laminar flow and support the diffuser net (28) and/or that the exhaust pipe (26) in the area of the diffuser (28) and in a following area having approximately the same length is provided with a fireproof lining (29).

## Revendications

1. Procédé pour optimiser la combustion de carburant avec une émission minimale de CO, par introduction préalable, dans le mélange air-carburant d'un liquide nébulisé contenant de l'eau de l'alcool et au moins un autre additif, et pour obtenir un mélange homogène liquide-carburant-air, caractérisé en ce que le liquide nébulisé neutre (déminéralisé) est essentiellement constitué d'eau distillée, qui contient un acide organique faible en une concentration, par rapport à l'eau distillée, comprise entre 1/500 et 1/200, de préférence 1/300, et d'alcool, et qu'il est ajouté au carburant en une proportion, par rapport au carburant, de 1 : 1000 à 15 : 1000, de préférence 10 : 1000 à 15 : 1000, le liquide nébulisé étant introduit dans le mélange carburant-air sous forme de fines gouttelettes, dans une zone d'écoulement turbulent,
ou le liquide nébulisé neutre (déminéralisé) est constitué par un mélange en proportions égales, d'une part, de quantités égales d'eau et de méthanol comportant 200 à 300 g de glycérine pour 4,5 l d'eau/méthanol, et d'autre part, d'un mélange méthanol-huile dans un rapport de 200 à 400 g, de préférence 300 g, d'huile pour 5 l de méthanol, et qu'il est ajouté au carburant dans une proportion par rapport au carburant de 1 : 1000 à 15 : 1000, de préférence 10 : 1000 à 15 : 1000, le liquide nébulisé étant mélangé sous forme de fines gouttelettes au mélange carburant-air dans une zone d'écoulement turbulent.

2. Procédé selon la revendication 1, caractérisé en ce que le liquide additionné de l'acide organique contient, pour deux parties en volume d'eau distillée, une partie en volume d'alcool, de préférence des alcools a courte chaîne, ou bien le liquide additionné de glycérine contient un mélange constitué de 2,5 parties en volume d'eau, de 2 parties de méthanol et de 200 à 300 g de glycérine.

3. Procédé selon l'une des revendications 1 ou 2, caractérisé en ce que l'on utilise du méthanol ou de l'éthanol, et l'huile est une huile synthétique ayant une température de vaporisation élevée.

4. Procédé selon l'une quelconque des revendications 1 à 3, caractérisé en ce qu'avant l'addition du mélange air-carburant, le liquide est pulvérisé dans une chambre sous une pression inférieure de 20 à 30 % à pression extérieure, le liquide constitué d'eau et d'alcool, de préférence additionné d'un acide organique, est introduit de façon dosée à partir d'un réservoir dans une chambre de pulvérisation, dans laquelle le niveau de liquide est à peu près constant, et dans laquelle un corps moulé poreux, à travers lequel de l'air extérieur est aspiré par l'intermédiaire de la faible pression régnant au-dessus de la surface du liquide, est disposé dans le liquide, l'air extérieur expulsant par pression le liquide se trouvant dans le corps moulé sous forme de fines gouttelettes (brouillard) à travers le liquide environnant, et ensuite, les fines gouttelettes (le brouillard) sont introduits dans le mélange carburant-air ou dans le carburant à travers une soupape de réglage.

5. Procédé selon l'une quelconque des revendications 1 à 3, caractérisé en ce que d'une part, le mélange constitué d'eau distillée, de méthanol et de glycérine et d'autre part, le mélange huile-méthanol sont dosés à partir de réservoirs différents dans des chambres de pulvérisation respectives, un corps poreux (pierre ponce) étant disposé dans le réservoir contenant le mélange d'eau, de méthanol et de glycérine, et un corps poreux, enveloppé d'une toile métallique, étant disposé dans le réservoir contenant le mélange alcool-huile, de l'air extérieur étant aspiré à travers ces corps poreux, par l'intermédiaire de la faible pression régnant au-dessus de la surface du liquide, l'air extérieur expulsant par pression le liquide se trouvant dans le corps moulé, sous forme de fines gouttelettes (brouillard) à travers le liquide environnant, et ensuite, les fines gouttelettes (brouillard) sont introduites dans le mélange air-carburant ou dans le carburant à travers des soupapes de réglage respectives.

6. Procédé selon la revendication 4 ou 5, caractérisé en ce que l'air aspiré est d'abord déchargé (neutralisé) et/ou l'amenée d'air, réalisée de préférence à travers une membrane, est ajustée de telle façon que si l'humidité de l'air est plus élevée, l'amenée d'air est réduite.

7. Procédé selon l'une quelconque des revendications 1 à 6, caractérisé en ce que l'introducation mesurée du liquide dans les chambres de pulvérisation respectives est réalisée par commande électromagnétique à l'aide d'un flotteur.

8. Procédé selon l'une quelconque des reventications 5 à 7, caractérisé en ce que le corps moulé et/ou le corps moulé en matière synthétique est soumis en outre, par l'intermédiaire d'une pompe réglable, à une pression correspondant à celle à laquelle le carburant est injecté à travers un injecteur.

9. Procédé selon l'une quelconque des revendications 1 à 8, caractérisé en ce que pendant l'accélération de la vitesse de rotation du moteur, l'air aspiré est introduit dans les chambres de pulvérisation par ouverture et fermeture à haute fréquence (domaine des ultrasons) d'une soupage à une voie, de façon pulsée (par impulsions).

10. Procédé selon l'une quelconque des revendications 4 à 9, caractérisé en ce que l'on fait passer le liquide nébulisé à travers un séparateur de gouttes, de préférence un tamis à mailles fines, qui ne laisse passer que les gouttes ayant un diamètre inférieur à l'ouverture des mailles, de préférence inférieur à 0,3 mm, avant qu'il ne soit introduit, par création d'une zone d'écoulement turbulent, dans le mélange air-carburant et/ou en ce que le liquide/brouillard, éventuellement chacun d'entre cux, est injecté à travers une entrée centrale ainsi qu'à travers une entrée radiale (buses) dans une chambre de diffusion, en produisant une zone d'écoulement turbulent, de façon que les gouttes de brouillard, rencontrant les particules de carburant, pulvérisent celles-ci (mécaniquement) et se mélangent avec les particules de carburant pulvérisées, de maniére à empêcher que les particules de carburant ne reforment des gouttes de plus grand diamétre.

11. Procédé selon l'une quelconque des revendications 1 à 10, caractérisé en ce que le carburant est (pré)pulvérisé par ultrasons avant ou pendant l'injection du liquide nébulisé, de préférence par le fait que la soupape du carburateur, servant de surface de rebondissement aux particules de carburant, est soumise à l'action des ultrasons.

12. Procédé selon l'une quelconque des reventications 1 ou 3 à 11, caractérisé en ce que, dans une premiére étape, un liquide nébulisé, constitué d'eau distillée, de méthanol et de glycérine, et dans une seconde étape, le liquide nébulisé constitué d'un mélange alcool-huile, sont injectés dans le carburant ou dans le mélange air-carburant, et/ou les particules de carburant incomplétement brûlées, sortant de la chambre de combustion, subissent une post-combustion par auto-allumage dans un pot d'échappement, dans un diffuseur en forme de grille, la glycérine servant d'accumulateur de chaleur selon la température régant dans la chambre de combustion.

13. Dispositif pour la mise en oeuvre de procédé selon l'une quelconque des revendications 1 à 12, comportant un diffuseur (18) pour liquide, monté en amont du carburateur ou d'une chambre de pré-mélange du moteur, qui comprend principalement au moins un réservoir (1) pour le liquide, une chambre de précombustion (2) munie d'un flotteuer (3), qui est en liaison avec une soupape magnétique commandant le flux liquide nébulisé, et au moins un chambre de pulvérisation (4), qui est en liaison avec au moins un diffuseur-cyclone (13) destiné à mélange le liquide nébulisé avec le mélange air-carburant ou le carburant, le diffuseur-cyclone (13) présentant une amenée (buse 16) pour le liquide nébulisé, orientée de telle façon, que le flux arrive perpendiculairement au flux du mélange air-carburant ou du carburant, caractérisé en ce que la chambre de pulvérisation (4) comporte un régulateur de dépression (9), qu'un corps moulé (5) poreux, de préférence un corps composite moulé par compression, perméable à l'air et aux liquides, ayant une porosité pouvant atteindre 60 %, est complètement immergé dans le liquide se trouvant dans la chambre de pulvérisation (4), ce corps moulé étant en liaison avec, ou pouvant être relié à, l'extérieur (air) par l'intermédiaire d'une conduite (19) comportant un mécanisme de réglage (11), et que dans la conduite d'amenée du carburant, une source d'ultrasons est montée en amont du diffuseur-cyclone.

14. Dispositif pour la mise en oeuvre du procédé selon l'une quelconque des revendications 1 à 12, comportant un diffuseur (18, 18') pour liquide, monté en amont du carburateur ou d'une chambre de pré-mélange du moteur, qui comprend principalement au moins un réservoir (1) pour le liquide, une chambre de précombustion (2, 2') munie d'un flotteur (3, 3'), qui est en liaison avec une soupape magnétique commandant le flux de liquide nébulisé, et au moins une chambre de pulvérisation (4, 4'), que est en liaison avec au moins un diffuseur-cyclone (13, 13') destiné à mélanger le liquide nébulisé avec le mélange air-carburant ou le carburant, le diffuseur-cyclone (13, 13') présentant une amenée (buse 16, 16') pour le liquide nébulisé, orientée de telle façon, que le flux arrive perpendiculairement au flux du mélange air-carburant ou du carburant, caractérisé en ce qu'il est prévu deux réservoirs (1) ou un réservoir avec deux chambres, deux chambres de pulvérisation (4, 4') comprenant chacune un régulateur de dépression (9, 9'), et deux diffuseurs-cyclones (13, 13'), un corps moulé (5) poreux, de préférence un corps composite moulé par compression, perméable à l'air et aux liquides, ayant une porosité pouvant atteindre 60 %, étant complétement immergé dans le liquide se trouvant dans la premiére chambre de pulvérisation (4), ce corps moulé étant en liaison avec, ou pouvant être relié à, l'extérieur (air) par l'intermédiaire d'une conduite (19) comportant un mécanisme de réglage (11), et dans le deuxiéme chambre de pulvérisation(4'), il est prévu un corps en matiére plastique (32) enveloppé dans une toile métallique (35) résistant à la corrosion, qui est également en liaison avec, ou peut étre relié à, l'extérieur (air) par l'intermédiaire d'une conduite (19') comportant un mécanisme de réglage (11'), et que dans la conduite d'amenée du carburant, une source d'ultrasons est montée en amont de chaque diffuseur-cyclone (13, 13').

15. Dispositif selon la revendication 13 ou 14, caractérisé en ce que les conduites d'amenée (buses 16, 16'; 15, 15') sont en liaison avec le diffuseur (18, 18') par l'intermédiaire d'un régulateur de pression (9, 9') et d'un distributeur (14, 14') et/ou, entre le réservoir (1) et la chambre de précombusition (2, 2'), il est prévu une soupape d'arrèt (10, 10') réglable qui délivre le liquide dans la chambre de précombustion (2, 2') de préférence de façon périodique.

16. Dispositif selon l'une quelconque des revendications 13 à 15, caractérisé en ce que le flotteur (3, 3') arrête le flux d'amenée entre le réservoir (1) et la chambre de diffusion (4, 4') lorsqu'il n'y a plus de liquide à amener dans le réservoir (1) ou lorsque le niveau du liquide dans la chambre de précombustion (2, 2') descend en dessous d'un niveau prédéterminé, et/ou les conduites d'amenée d'air (19, 19') sont munies chacune d'une soupape à bec à une voie (36), de préférence, une autre conduite (39) d'aspiration d'air, munie d'une soupape d'arrêt (38) réglable par un dispositif de régulation (37), débouche à proximité de la soupape (36, 36') dans les conduites (19, 19'), ce qui permet d'imprimer aux soupapes (36, 36') des oscillations de haute fréquence, dans le domaine des ultrasons, au moyen de l'air aspiré par la conduite (39).

17. Dispositif selon la revendication 16, caractérisé en ce qu'une autre conduite d'aspiration d'air (8, 8'), reliée à une pompe (6, 6') réglable, débouche dans le corps moulé (5) et/ou dans le corps en matiére plastique (5').

18. Dispositif selon l'ne quelconque des revendications 13 à 17, caractérisé en ce qu'avant la sortie du diffuseur ou du régulateur de pression (9, 9') il est prévu un séparateur de gouttes (7, 7') pour les gouttes dont la taille dépasse une grandeur maximale (déterminée) de 0,3 mm, de préférence un tamis mécanique multicouche à mailles (7, 7') et/ou que dans la conduite d'aspiration d'air (19, 19'), ou dans une premiére chambre (20, 20') du diffuseur (4, 4'), il est prévu un neutralisateur (17), de préférence un condensateur, et que de préférence tous les régulateurs et/ou soupapes et distributeurs 3, 9, 10, 11, 12, 14, 24, 25 et 36 à 38) sont reliés entre eux par l'intermédiaire d'une commande centrale.

19. Dispositif selon l'une quelconque des revendications 13 à 18, caractérisé en ce que le diffuseur-cyclone est conçu en deux parties, chacune étant reliée à un réservoir (1).

20. Dispositif selon l'une quelconque des revendications 13 à 19, caractérisé en ce que la source d'ultrasons est dirigée vers la soupape de carburateur qui sert de surface de rebondissement pour le carburant, la source d'ultrasons étant disposée de préférence directement au-dessus du diffuseur-cyclone, de préférence à une distance de 1,5 mm à 2 mm.

21. Dispositif selon l'une quelconque des revendications 13 à 20, caractérisé en ce qu'il est prévu deux diffuseurs-cyclones (13, 13'), à travers lesquels on injecte, dans la premiére étape (13), un brouillard constitué d'un mélange eau-alcool-clycérine, et dans la deuxiéme étape (13'), un brouillard constitué d'un mélange méthanol-huile, dans le carburant ou dans le mélange air-carburant, et qu'après la ou les chambres de combustion, se trouve une conduite d'échappement (pot d'échappement) traversée par les gaz d'échappement (27), qui comprend un diffuseur en forme de grille, couvrant toute la section de la conduite, en matériau résistant à la corrosion, en particulier en acier inoxydable, dans lequel a lieu une post-combustion auto-déclenchée par les gaz chauds (27), l'ouverture de maille d diffuseur (28) en forme de grille, qui est comprise de préférence entre 0,5 et 3 µm, étant plus petite à l'extrémité de sortie des gaz d'échappement que dans la partie précédente, et/ou l'ouverture de maille à l'extrémité de sortie des gaz d'échappement étant moitié plus petite que dans la premiére partie.

22. Dispositif selon la revendication 21, caractérisé en ce que la partie libre de la conduite de passage des gaz d'échappement (27), qui n'est pas couverte par un diffuseur en forme des grille (28), est de structure concave, les zones convexes opposées du diffuseur en forme de grille étant en contact à peu près dans la zone médiane, et/ou deux zones convexes opposées du duffuseur en forme de grille, montées directement l'une derrière l'autre dans la conduite des gaz d'échappement, sont chacune en contact à peu prés dans la zone médiane, de préférence de telle façon, que - vu dans le sens de l'écoulement - la premiére zone du diffuseur en forme de grille, y compris certaines fixations de stabilisation, ou des chicanes, est en acier inoxydable, la zone suivante est constituée d'un alliage d'acier inoxydable contenant du cuivre et la derniére partie, d'un alliage de Cu pur.

23. Dispositif selon l'une des revendications 21 ou 22, caractérisé en ce que des chicanes (31) en forme d'aube, prévues dans le diffuseur en forme de grille, laissent passer les gaz d'échappement suivant un écoulement laminaire, et soutiennent le diffuseur en forme de grille (28), et/ou que le pot d'échappement (26) est muni d'une garniture ignifugée dans la zone du diffuseur (28) et dans une zone subséquente, ayant à peu prés la même longueur.
